# EUROPÄISCHE PATENTSCHRIFT

(11) **EP 3 866 567 B1**
(45) Veröffentlichungstag und Bekanntmachung des Hinweises auf die Patenterteilung: **18.09.2024**
(21) Anmeldenummer: 21155530.5
(22) Anmeldetag: 05.02.2021
(51) Int. Cl.: H05B 6/14, H05B 6/44, B23P 11/02

(54) **PROZESSGESTEUERTE ENERGIEVERSORGUNG EINER INDUKTIONSSPULE ZUR ERWÄRMUNG VON WARMSCHRUMPFFUTTERN**
PROCESS-CONTROLLED POWER SUPPLY FOR AN INDUCTION COIL FOR HEATING OF SHRINK-FIT CHUCKS
APPROVISIONNEMENT ÉNERGÉTIQUE COMMANDÉ PAR PROCESSUS D'UNE BOBINE D'INDUCTION DESTINÉ AU CHAUFFAGE DU REVÊTEMENT D'ANTIFRICTION THERMORÉTRACTABLE

(30) Priorität: 14.02.2020 DE 102020103871
(43) Veröffentlichungstag der Anmeldung: 18.08.2021
(73) Patentinhaber: E. Zoller GmbH & Co. KG Einstell- und Messgeräte, 74385 Pleidelsheim (DE); Karl Schüssler GmbH & Co. KG, 72411 Bodelshausen (DE)
(72) Erfinder: Pfau, Christian, 74379 Ingersheim (DE); Zoller, Alexander, 74385 Pleidelsheim (DE); Schüssler, Klaus, 72411 Bodelshausen (DE)
(74) Vertreter: Daub, Thomas

(56) Entgegenhaltungen:
- EP-A1- 1 750 485
- EP-A2- 1 314 511
- DE-A1- 102005 004 166

## Beschreibung

### Stand der Technik

Die Erfindung betrifft eine Induktionsheizvorrichtung nach dem Oberbegriff des Anspruchs 1, eine Ein- und/oder Ausschrumpfspannstation nach Anspruch 25 und ein Verfahren zum Betrieb der Induktionsheizvorrichtung nach dem Oberbegriff des Anspruchs 26.

Es ist bereits eine Induktionsheizvorrichtung für ein Ein- und/oder Ausschrumpfen von Werkzeugen in und/oder aus Werkzeugaufnahmen mit einer Induktionsheizeinheit, welche zumindest einen ersten Induktor und zumindest einen zweiten Induktor umfasst, wobei der erste Induktor und der zweite Induktor dazu vorgesehen sind, jeweils zumindest einen Teil der Werkzeugaufnahme bei einem Ein- und/oder Ausschrumpfvorgang durch ein induktives Erhitzen aufzuweiten, und mit einer elektrischen Versorgereinheit, vorgeschlagen worden.

EP 1 750 485 A1 (RS ELEKTRONIK GMBH [DE]) 7. Februar 2007 (2007-02-07) beschreibt eine Vorrichtung und ein Verfahren zum induktiven Erwärmen von Werkzeugaufnahmen.

Die Aufgabe der Erfindung besteht insbesondere darin, eine gattungsgemäße Vorrichtung mit vorteilhaften Eigenschaften, insbesondere Erwärmungs- und/oder Energieübertragungseigenschaften, hinsichtlich eines Schrumpfspannens bereitzustellen. Die Aufgabe wird erfindungsgemäß durch die Merkmale der Patentansprüche 1, 25 und 26 gelöst, während vorteilhafte Ausgestaltungen und Weiterbildungen der Erfindung den Unteransprüchen entnommen werden können.

### Vorteile der Erfindung

Die Erfindung geht aus von einer Induktionsheizvorrichtung für ein Ein- und/oder Ausschrumpfen von Werkzeugen in und/oder aus Werkzeugaufnahmen mit einer Induktionsheizeinheit, welche zumindest einen ersten Induktor und zumindest einen, vorzugsweise von dem ersten Induktor getrennt ausgebildeten, zweiten Induktor umfasst, wobei der erste Induktor und der zweite Induktor dazu vorgesehen sind, jeweils zumindest einen, insbesondere unterschiedlichen, Teil der Werkzeugaufnahme bei einem Ein- und/oder Ausschrumpfvorgang durch ein induktives Erhitzen aufzuweiten, und mit einer elektrischen Versorgereinheit.

Es wird vorgeschlagen, dass die Induktoren dazu vorgesehen sind, beispielsweise durch eine, vorzugsweise zeitliche, Steuerung der Induktoren mittels einer Steuer- und/oder Regeleinheit, insbesondere gezielt, jeweils unterschiedliche Energien an unterschiedliche Teilbereiche einer Werkzeugaufnahme, welche in einem Erwärmungsbetrieb jeweils von den Induktoren umgeben sind, abzugeben, indem einer der Induktoren mehr Windungen aufweist als der andere Induktor, insbesondere zumindest 10 %, vorzugsweise zumindest 20 % und bevorzugt zumindest 30 % mehr Windungen, und/oder indem die elektrische Versorgereinheit zumindest dazu vorgesehen ist, den ersten Induktor und den zweiten Induktor unterschiedlich zu betreiben, insbesondere zumindest zeitlich unterschiedlich zu betreiben und/oder zeitlich unterschiedlich anzusteuern. Dadurch können insbesondere vorteilhafte Erwärmungs- und/oder Energieübertragungseigenschaften hinsichtlich eines Schrumpfspannens erreicht werden. Vorteilhaft kann eine besonders effektive und/oder präzise Kontrolle über einen Erwärmungsvorgang einer Werkzeugaufnahme, insbesondere eines Schrumpfspannfutters, ermöglicht werden. Vorteilhaft kann eine besonders effektive und/oder präzise Kontrolle einer thermischen Aufweitung eines Aufnahmebereichs für Werkzeuge der Werkzeugaufnahme erreicht werden. Vorteilhaft kann dadurch, insbesondere im Vergleich zu bisherigen Induktionsheizvorrichtungen, welche lediglich einen Induktor oder lediglich zwei baugleiche Induktoren umfassen, eine wesentliche Energieeinsparung (in einem Bereich von bis zu 25 % und mehr) und/oder eine wesentliche Zeitersparnis pro Erwärmungsvorgang erreicht werden. Vorteilhaft kann verhindert werden, dass bei einem Schrumpfspannvorgang eine zu große Energie an die Werkzeugaufnahme übertragen wird oder werden muss, welche eine Lebensdauer der Werkzeugaufnahme beeinträchtigen kann. Insbesondere kann dadurch eine besonders vorteilhafte und/oder einfache Einstellung einer Position eines Singularpunkts eines die Erwärmung der Werkzeugaufnahme erzeugenden Induktionsmagnetfelds, d.h. insbesondere eines die Erwärmung der Werkzeugaufnahme erzeugenden elektromagnetischen Wechselfelds, erreicht werden, welche insbesondere im Gegensatz zu bisher bekannten Lösungen, vorteilhaft ohne zueinander in ihrem Abstand verstellbare Induktoren und/oder ohne zusätzliche Feldformerelemente, insbesondere zwischen zwei Induktoren, auskommt. Dadurch kann, insbesondere im Vergleich zu den erwähnten bisher bekannten Lösungen, vorteilhaft eine mechanische Komplexität wesentlich reduziert werden, insbesondere indem vorteilhaft auf eine aufwändige, fehleranfällige und zeit- und kostenintensive mechanische Verstellbarkeit von Abständen von Induktoren zueinander verzichtet werden kann. Zudem kann dadurch vorteilhaft eine Energieübertragung auf Bereiche der Werkzeugaufnahme konzentriert werden, welche am Schrumpfspannprozess beteiligt sind, d.h. insbesondere auf Bereiche der Werkzeugaufnahme rund um den Aufnahmebereich. Vorteilhaft kann mittels einer geeigneten Steuerung und/oder Regelung der, insbesondere zumindest zeitlich, unterschiedlich betriebenen Induktoren eine Optimierung der Erwärmung und/oder des Energieübertrags von der Induktionsheizeinheit an eine Vielzahl verschiedener, insbesondere unterschiedlich geformter und/oder unterschiedlich großer, Werkzeugaufnahmen ermöglicht werden. Vorteilhaft kann ein erfolgreiches und/oder effektives Einspannen und/oder Ausspannen von Werkzeugen in oder aus einer besonders großen Zahl verschiedener, insbesondere unterschiedlich geformter und/oder unterschiedlich großer, Werkzeugaufnahmen ermöglicht werden. Dadurch kann vorteilhaft eine besonders hohe Flexibilität, insbesondere Parameter-Flexibilität, der Induktionsheizvorrichtung erreicht werden, insbesondere indem vorteilhaft verschiedene Parameter der Induktionsheizeinheit, wie beispielsweise die Aktivierungszeit und/oder das Aktivierungsschema der Induktionsmagnetfelder der Induktionsheizeinheit und/oder der Energieübertrag von der Induktionsheizeinheit an die Werkzeugaufnahme auf vorteilhaft einfache Weise flexibel eingestellt, geregelt und/oder gesteuert werden können. Vorteilhaft können durch die erhöhte Effektivität, d.h. insbesondere durch die Energieeinsparung, Kosten gesenkt werden. Zudem kann dadurch vorteilhaft auch ein an den Erwärmungsvorgang anschließender Kühlprozess schneller und energiesparender durchgeführt werden. Durch die beschriebene Energieeinsparung kann in vielen Fällen sogar vorteilhaft erreicht werden, dass vollständig auf eine Zwangskühlung der Werkzeugaufnahme, wie beispielsweise eine Wasserkühlung im Anschluss an einen Einspannvorgang und/oder an einen Ausspannvorgang verzichtet werden kann. Zusätzlich können die Induktoren auch dazu vorgesehen sein, zumindest im Wesentlichen gleiche Energien an die unterschiedlichen Teilbereiche der Werkzeugaufnahme abzugeben. Vorteilhaft ist eine Energieabgabe an einen Teilbereich abhängig von der induktiv aufheizbaren Masse des Werkzeugaufnahme in dem Teilbereich.

Unter einer "Induktionsheizvorrichtung" soll insbesondere zumindest ein Teil, insbesondere eine Unterbaugruppe, eines Induktionsheizgeräts, insbesondere einer Ein- und/oder Ausschrumpfspannstation, verstanden werden, wobei insbesondere zusätzlich auch Zubehöreinheiten für das Induktionsheizgerät umfasst sein können, wie beispielsweise eine Sensoreinheit zur Messung einer Temperatur einer Werkzeugaufnahme oder zur Messung eines Energieverbrauchs während des Induktionsheizvorgangs. Insbesondere kann die Induktionsheizvorrichtung auch das gesamte Induktionsheizgerät umfassen. Insbesondere ist die Induktionsheizvorrichtung dazu vorgesehen, ein Ein- und/oder Ausschrumpfen von Werkzeugen in und/oder aus Werkzeugaufnahmen durch eine thermische Ausdehnung eines Aufnahmebereichs einer Werkzeugaufnahme zu ermöglichen. Insbesondere ist die Induktionsheizvorrichtung dazu vorgesehen, Werkzeugaufnahmen zu erhitzen.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einer "Werkzeugaufnahme" soll insbesondere ein Bauteil verstanden werden, welches zu einer Aufnahme eines Werkzeugs und einer Verbindung des Werkzeugs mit einer Maschine vorgesehen ist. Insbesondere ist die Werkzeugaufnahme als eine Schnittstelle zwischen Werkzeug und Maschine ausgebildet. Vorzugsweise ist die Werkzeugaufnahme als ein Werkzeugfutter, insbesondere ein Schrumpffutter, bevorzugt ein Warmschrumpffutter, ausgebildet. Das Werkzeug ist insbesondere als ein Schaftwerkzeug, vorzugsweise als ein Rotations-Schaftwerkzeug, beispielsweise ein Bohrer, ein Fräser, ein Profilwerkzeug und/oder eine Reibahle ausgebildet. Unter einem "Einschrumpfen von Werkzeugen in und/oder aus Werkzeugaufnahmen" soll insbesondere ein Einspannen von Werkzeugen in Werkzeugaufnahmen verstanden werden, bei dem eine Werkzeugaufnahmeöffnung der Werkzeugaufnahme zunächst thermisch aufgeweitet wird, dann ein Werkzeug in die Werkzeugaufnahmeöffnung eingeführt wird und wobei das Werkzeug schließlich nach einem Abkühlen der Werkzeugaufnahme durch einen Kraftschluss, insbesondere umfassend zumindest einen Reibschluss, in der Werkzeugaufnahme befestigt ist. Unter einem "Ausschrumpfen von Werkzeugen in und/oder aus Werkzeugaufnahmen" soll insbesondere ein Lösen von mittels eines Kraftschlusses, insbesondere eines Reibschlusses, in Werkzeugaufnahmen befestigten Werkzeugen verstanden werden, bei dem die Werkzeugaufnahmeöffnung der Werkzeugaufnahme thermisch soweit aufgeweitet wird, bis das in der Werkzeugaufnahme befestigte Werkzeug aus der Werkzeugaufnahme entnehmbar ist. Unter "zumindest einem Teil der Werkzeugaufnahme" soll insbesondere zumindest ein den Aufnahmebereich der Werkzeugaufnahme umfassender Bereich der Werkzeugaufnahme verstanden werden.

Die Induktionsheizeinheit ist insbesondere dazu vorgesehen, ein Induktionsmagnetfeld, d.h. vorzugsweise ein, insbesondere hochfrequentes, elektromagnetisches Wechselfeld, insbesondere mit einer symmetrischen Form, zu erzeugen. Alternativ oder zusätzlich ist jedoch auch denkbar, dass die Induktionsheizeinheit dazu vorgesehen ist, ein elektromagnetisches Wechselfeld mit einer beliebigen anderen Form, beispielsweise einer asymmetrischen oder einer gepulsten Form zu erzeugen. Insbesondere wechselwirkt das Material der, vorzugsweise ein elektrisch leitfähiges, beispielsweise metallisches, insbesondere ferro-, para-, oder diamagnetisches, Material umfassenden Werkzeugaufnahme mit dem elektromagnetischen Wechselfeld und erhitzt sich dadurch. Insbesondere ist ein Induktor ein Überträger eines Stroms aus der Induktionsheizeinheit in die Werkzeugaufnahme. Vorzugsweise umfasst der erste Induktor und/oder der zweite Induktor einen elektrischen Leiter mit Windungen. Bevorzugt ist der erste Induktor und/oder der zweite Induktor jeweils als eine, ein elektromagnetisches Wechselfeld erzeugende Spule, insbesondere als eine Induktionsspule, ausgebildet. Insbesondere sind die beiden Induktoren dazu vorgesehen, den Teil einer Werkzeugaufnahme zu erhitzen, welcher in einem um eine Spulenachse angeordneten Inneren der Induktoren angeordnet ist. Insbesondere sind die beiden Induktoren dazu vorgesehen, unterschiedliche, in einer Vertikalrichtung, insbesondere parallel zu den Spulenachsen der Induktoren, vorzugsweise entlang einer gemeinsamen Spulenachse der Induktoren, übereinander angeordnete Teile der Werkzeugaufnahme bei dem Ein- und/oder Ausschrumpfvorgang induktiv zu erhitzen. Insbesondere sind die Induktoren verschieden von weiteren Hilfswicklungen der Induktionsheizeinheit ausgebildet, welche z.B. zur Abschirmung von Magnetfeldern oder zur Versorgung weiterer Einheiten, wie Ventilatoren, LEDs, elektrische Aktoren, etc., vorgesehen sind. Insbesondere ist zumindest ein relativer Abstand der Induktoren zueinander in einem Betriebszustand, in dem die Induktoren in der Induktionsheizeinheit montiert sind, zumindest im Wesentlichen unveränderlich. Insbesondere sind die Induktoren zueinander ortsfest in der Induktionsheizeinheit angeordnet. Insbesondere sind die Induktoren unbeweglich in der Induktionsheizeinheit fixiert. Alternativ ist jedoch auch denkbar, dass zumindest einer der Induktoren beweglich in der Induktionsheizeinheit angeordnet ist und/oder in der Induktionsheizeinheit relativ zu dem anderen Induktor verschiebbar ist.

Die elektrische Versorgereinheit ist insbesondere als eine Strom- und/oder Spannungsversorgungseinheit, vorzugsweise als eine Konstantstrom- oder Konstantspannungsversorgungseinheit, ausgebildet. Die elektrische Versorgereinheit ist insbesondere dazu vorgesehen, den ersten Induktor und den zweiten Induktor mit einem Induktionswechselstrom, insbesondere mit einer symmetrischen Form, zu versorgen. Alternativ oder zusätzlich ist jedoch auch denkbar, dass die elektrische Versorgereinheit dazu vorgesehen ist, einen Induktionswechselstrom mit einer beliebigen anderen Form, beispielsweise einer asymmetrischen oder einer gepulsten Form zu erzeugen. Die elektrische Versorgereinheit ist insbesondere dazu vorgesehen, den ersten Induktor und den zweiten Induktor mit elektrischer Energie zu versorgen. Insbesondere weist die elektrische Versorgereinheit einen ersten Anschluss für den ersten Induktor, insbesondere zu einer Versorgung des ersten Induktors mit, vorzugsweise mittel- oder hochfrequentem, Wechselstrom, auf. Insbesondere weist die elektrische Versorgereinheit einen zweiten Anschluss für den zweiten Induktor, insbesondere zu einer Versorgung des zweiten Induktors mit, vorzugsweise mittel- oder hochfrequentem, Wechselstrom, auf. Insbesondere umfasst jeder Anschluss der elektrischen Versorgereinheit zumindest zwei elektrische Kontakte, welche vorzugsweise dazu vorgesehen sind, bei einer Verbindung mit einem der Induktoren einen elektrischen Stromkreis zu schließen. Insbesondere ist denkbar, dass zumindest ein elektrischer Kontakt eines Anschlusses zugleich auch einen elektrischen Kontakt eines weiteren Anschlusses ausbildet. Folglich können der erste Anschluss und der zweite Anschluss zusammen über nur drei elektrische Kontakte (gemeinsamer elektrischer Punkt der beiden Induktoren) verfügen oder der erste Anschluss und der zweite Anschluss verfügen zusammen über vier elektrische Kontakte (kein gemeinsamer elektrischer Punkt der beiden Induktoren). Insbesondere weist die elektrische Versorgereinheit zumindest zwei Wechselstromausgänge auf. Außerdem ist denkbar, dass die elektrische Versorgereinheit mehr als zwei Wechselstromausgänge aufweist, beispielsweise einen dritten Anschluss für einen dritten Induktor. Insbesondere ist die elektrische Versorgereinheit auch dazu vorgesehen, den ersten Induktor und den zweiten Induktor, insbesondere zeitlich, gleich zu betreiben. Vorzugsweise ist die elektrische Versorgereinheit dazu vorgesehen, den ersten Induktor oder den zweiten Induktor wahlweise gleich, insbesondere zumindest zeitlich gleich, oder unterschiedlich, insbesondere zeitlich, unterschiedlich zu betreiben und/oder anzusteuern. Vorzugsweise sind der erste Induktor und der zweite Induktor mit unterschiedlichen Anschlüssen der elektrischen Versorgereinheit verbunden, wobei insbesondere zumindest die Stromversorgung der unterschiedlichen Anschlüsse unabhängig voneinander aktivierbar und deaktivierbar ist. Alternativ wäre auch denkbar, dass die elektrische Versorgereinheit dazu vorgesehen ist, beide Induktoren über einen einzelnen elektrischen Anschluss (d.h. zwei elektrische Kontakte) zu versorgen, wobei die elektrische Versorgereinheit einen gesteuerten Schalter, beispielsweise ein Relais, einen Schütz, einen Halbleiter oder dergleichen, aufweist, mittels welchem einer der beiden Induktoren, beispielsweise der zweite Induktor, separat deaktivierbar ist. Insbesondere sind zusätzlich oder alternativ zu den in diesem Dokument explizit beschriebenen Methoden und Schaltungen beliebige weitere, dem Fachmann geläufige Methoden und Schaltungen denkbar, welche eine unterschiedliche, insbesondere zeitlich unterschiedliche, Betreibbarkeit der beiden Induktoren ermöglichen.

Insbesondere umfasst die elektrische Versorgereinheit zumindest eine Steuer- und/oder Regeleinheit. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Insbesondere ist die Steuer- und/oder Regeleinheit zumindest dazu vorgesehen, den an den Anschlüssen der Stromversorgung der elektrischen Versorgereinheit anliegenden Strom unabhängig voneinander anzuschalten oder abzuschalten. Insbesondere ist die Steuer- und/oder Regeleinheit zumindest dazu vorgesehen, einen zumindest an einem Anschluss der Stromversorgung der elektrischen Versorgereinheit, vorzugsweise an beiden Anschlüssen der Stromversorgung der elektrischen Versorgereinheit, anliegenden Strom, insbesondere eine Stromstärke des Effektivwerts des Wechselstroms, zu steuern und/oder zu regeln. Insbesondere ist die Steuer- und/oder Regeleinheit zumindest dazu vorgesehen, eine zumindest an einem Anschluss der Stromversorgung der elektrischen Versorgereinheit, vorzugsweise an beiden Anschlüssen der Stromversorgung der elektrischen Versorgereinheit, anliegende Frequenz, insbesondere Wechselstromfrequenz, zu steuern und/oder zu regeln. Insbesondere ist die Steuer- und/oder Regeleinheit zumindest dazu vorgesehen, eine zumindest an einem Anschluss der Stromversorgung der elektrischen Versorgereinheit, vorzugsweise an beiden Anschlüssen der Stromversorgung der elektrischen Versorgereinheit, anliegende Pulsbreite zu steuern und/oder zu regeln. Insbesondere ist die Steuer- und/oder Regeleinheit zumindest dazu vorgesehen, eine Phasengleichheit an beiden Anschlüssen beider Induktoren zu gewährleisten. Insbesondere ist die Steuer- und/oder Regeleinheit zumindest dazu vorgesehen, eine über den ersten Anschluss und/oder eine über den zweiten Anschluss ausgegebene elektrische Energie zu steuern und/oder zu regeln.

Unter einem "unterschiedlichen Betreiben" soll insbesondere zumindest ein zeitlich unterschiedliches Betreiben verstanden werden, beispielsweise ein Stoppen der Stromzufuhr an den zweiten Induktor zu einem unterschiedlichen Zeitpunkt als ein Stoppzeitpunkt der Stromzufuhr des ersten Induktors. Vorzugsweise soll unter dem unterschiedlichen Betreiben zumindest die Möglichkeit verstanden werden, den zweiten Induktor zu einer anderen Zeit zu deaktivieren als den ersten Induktor. Vorzugsweise werden dabei beide Induktoren immer zumindest mit gleicher Phase und/oder Frequenz, vorzugsweise zumindest elektrisch gleich, betrieben. Insbesondere ist die elektrische Versorgereinheit zumindest dazu vorgesehen, zumindest einen der Induktoren, beispielsweise den zweiten Induktor, intermittierend zu betreiben. Insbesondere ist die elektrische Versorgereinheit zumindest dazu vorgesehen, die beiden Induktoren bei einem Einspannvorgang oder bei einem Ausspannvorgang mit unterschiedlichen Gesamtbetriebsdauern zu betreiben.

Zudem wird vorgeschlagen, dass die elektrische Versorgereinheit dazu vorgesehen ist, die beiden Induktoren derart unterschiedlich zu betreiben, dass ein, insbesondere gewünschter, Energieeintrag in einen um einen Aufnahmebereich einer Werkzeugaufnahme angeordneten ersten Teilbereich der Werkzeugaufnahme, welcher in einem Erwärmungsbetrieb von einem der Induktoren umgeben ist, zu einem, insbesondere ebenfalls gewünschten, Energieeintrag in einen ebenfalls um den Aufnahmebereich der Werkzeugaufnahme angeordneten zweiten Teilbereich der Werkzeugaufnahme, welcher in dem Erwärmungsbetrieb von dem anderen der Induktoren umgeben ist, ausbalanciert ist, so dass eine Radialdehnung des gesamten Aufnahmebereichs der Werkzeugaufnahme in dem Erwärmungsbetrieb in beiden Teilbereichen zumindest im Wesentlichen gleich ist, wobei insbesondere der erste Teilbereich eine geringere Materialstärke oder Masse aufweist als der zweite Teilbereich. Dadurch können insbesondere vorteilhafte Erwärmungs- und/oder Energieübertragungseigenschaften hinsichtlich eines Schrumpfspannens erreicht werden. Vorteilhaft kann eine besonders präzise und gleichmäßige, insbesondere radiale, Ausdehnung der Werkzeugaufnahme gewährleistet werden. Insbesondere ist der unterschiedliche Energieeintrag in die Teilbereiche der Werkzeugaufnahme mittels einer Steuerung der jeweiligen Gesamtbetriebsdauern der Induktoren während eines einzelnen Einspannvorgangs oder während eines einzelnen Ausspannvorgangs einstellbar. Vorzugsweise wird dazu der jeweilige optimale Energieeintrag für eine Werkzeugaufnahme, insbesondere einen Werkzeugaufnahmetyp, mittels eines Trial-and-Error-Verfahrens ermittelt. Alternativ ist jedoch auch denkbar, dass der jeweilige optimale Energieeintrag aus Eigenschaften (Dicke, Masse, Material, etc.) der jeweiligen Werkzeugaufnahmen, insbesondere Werkzeugaufnahmetypen, berechnet wird, beispielsweise mit Hilfe der Steuer- und/oder Regeleinheit. Außerdem ist alternativ denkbar, dass der jeweilige Energieeintrag über Sensoren, z.B. Temperatursensoren, ermittelt oder abgeschätzt wird und basierend auf Sensordaten gesteuert wird, beispielsweise mit Hilfe der Steuer- und/oder Regeleinheit. Insbesondere kann der erste Teilbereich in Richtung einer Aufnahmeöffnung der Werkzeugaufnahme gesehen oberhalb oder unterhalb des zweiten Teilbereichs liegen. In den meisten Fällen ist jedoch der Teilbereich mit der höheren Materialstärke oder Masse in einem unteren Teil der Werkzeugaufnahme angeordnet, so dass der erste Teilbereich in Richtung der Aufnahmeöffnung der Werkzeugaufnahme oberhalb des zweiten Teilbereichs liegt. Insbesondere bewirkt die Ausbalancierung der Energieeinträge einen vorteilhaften Temperaturgradienten in der Werkzeugaufnahme, welche insbesondere verhindert, dass eine zu starke axiale Dehnung eines Teilbereichs der Werkzeugaufnahme zu Spannungen innerhalb der Werkzeugaufnahme führt, welche beispielsweise eine unerwünschte Verengung in einem oberen Teil des Aufnahmebereichs zu Folge haben kann. Insbesondere kann verhindert werden, dass eine zu starke Erwärmung eines materialstärkeren unteren Teilbereichs der Werkzeugaufnahme eine starke Axialdehnung erzeugt, welche die Verengung des Aufnahmebereichs in dem oberen, materialschwächeren Teil zur Folge hat.

Weiterhin wird vorgeschlagen, dass die elektrische Versorgereinheit dazu vorgesehen ist, den ersten Induktor und den zweiten Induktor in Phase zu betreiben. Dadurch können vorteilhafte elektrische Eigenschaften erreicht werden. Insbesondere kann vorteilhaft eine möglichst effektive und/oder möglichst simple Ausgestaltung der elektrischen Versorgereinheit ermöglicht werden. Zudem können dadurch vorteilhafte Induktionseigenschaften, insbesondere vorteilhafte Eigenschaften der erzeugten elektromagnetischen Wechselfelder erreicht werden. Unter einem Betrieb der Induktoren "in Phase" soll insbesondere verstanden werden, dass die Wechselströme der beiden Induktoren in Phase sind. Vorzugsweise beträgt ein Phasenverschiebungswinkel, insbesondere eine Phasendifferenz, des Wechselstroms des ersten Induktors zu dem Wechselstrom des zweiten Induktors null. Insbesondere sind die Wechselströme der beiden Induktoren, vorzugsweise aller Induktoren, gleichphasig. Insbesondere ist die elektrische Versorgereinheit dazu vorgesehen, den ersten Induktor und den zweiten Induktor frequenzgleich, d.h. vorzugsweise mit der gleichen Wechselstromfrequenz, zu betreiben. Insbesondere ist die elektrische Versorgereinheit dazu vorgesehen, den ersten Induktor und den zweiten Induktor mit identischen Pulsbreiten zu betreiben. Alternativ oder zusätzlich ist jedoch auch denkbar, dass die elektrische Versorgereinheit dazu vorgesehen ist, den ersten Induktor und den zweiten Induktor mit unterschiedlichen Pulsbreiten zu betreiben.

Des Weiteren wird vorgeschlagen, dass der erste Induktor und der zweite Induktor in einem Erwärmungsbetrieb richtungsgleiche Magnetfelder erzeugen. Zudem können dadurch vorteilhafte Induktionseigenschaften, insbesondere vorteilhafte Eigenschaften der erzeugten elektromagnetischen Wechselfelder erreicht werden. Vorteilhaft kann eine effektive Erwärmung der Werkzeugaufnahme gewährleistet werden. Unter einem "Erwärmungsbetrieb" soll insbesondere ein Betrieb verstanden werden, in dem zumindest einer, vorzugsweise zumindest mehrere Induktoren, von einem Wechselstrom durchflossen sind und dadurch zumindest einen Teil einer Werkzeugaufnahme induktiv erwärmen. Darunter, dass zwei Induktoren "richtungsgleiche Magnetfelder" erzeugen, soll insbesondere verstanden werden, dass zumindest die in einem Nahbereich der Spulenachsen der Induktoren verlaufenden magnetischen Feldlinien der elektromagnetischen Wechselfelder der beiden Induktoren zumindest in einem Zustand in dem das elektromagnetische Wechselfeld der Induktoren frei ist von elektrisch leitfähigen Teilen, beispielsweise Werkzeugaufnahmen, im Wesentlichen gleich ausgerichtet sind. Die in dem Nahbereich der Spulenachsen der Induktoren verlaufenden magnetischen Feldlinien der elektromagnetischen Wechselfelder der beiden Induktoren sind insbesondere zumindest im Wesentlichen parallel zueinander. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Insbesondere erfahren Probekörper, welche sich in einem von den Wicklungen der beiden Induktoren umschlossenen Raum befinden, durch das jeweilige richtungsgleiche elektromagnetische Wechselfeld des jeweiligen Induktors ausgeübte Kräfte, welche in zumindest im Wesentlichen identische Richtungen gerichtet sind. Vorteilhaft kann eine enge magnetische Kopplung der elektromagnetischen Wechselfelder der verschiedenen Induktoren erreicht werden.

Wenn der erste Induktor und der zweite Induktor elektrisch parallelgeschaltet sind, kann insbesondere ein besonders vorteilhaftes elektromagnetisches Wechselfeld erzeugt werden, dessen Energieübertrag insbesondere präzise und zuverlässig über einen ausreichend großen Bereich einstellbar ist. Vorteilhaft kann bei einer Parallelschaltung der Induktoren zumindest für einen Teil eines Einschrumpfvorgangs oder eines Ausschrumpfvorgangs einer der beiden Induktoren ausgeschaltet sein, während der andere der beiden Induktoren in Betrieb ist. Vorteilhaft kann ein intermittierender Betrieb von nur einem der beiden Induktoren ermöglicht werden. Vorteilhaft wird eine besonders hohe Flexibilität ermöglicht, insbesondere hinsichtlich des Schrumpfspannens verschieden geformter Werkzeugaufnahmen.

Wenn zudem der erste Induktor und der zweite Induktor einen gemeinsamen elektrischen Punkt besitzen, kann vorteilhaft eine besonders einfache und kostengünstige Ausführung der elektrischen Versorgereinheit ermöglicht werden. Insbesondere kann eine Einstellung der Wechselströme der beiden Induktoren vereinfacht werden. Zudem kann auf vorteilhaft einfache Weise eine Phasen-, Frequenz- und/oder Pulsbreitengleichheit erreicht werden. Insbesondere erzeugt der gemeinsame elektrische Punkt einen gemeinsamen elektrischen Referenzpunkt für beide Induktoren, beispielsweise für ein elektrisches Potential. Insbesondere bildet der gemeinsame elektrische Punkt einen gemeinsamen elektrischen Versorgungspunkt aus. Alternativ ist jedoch auch denkbar, dass die beiden Induktoren keinen gemeinsamen elektrischen Punkt aufweisen, insbesondere elektrisch voneinander getrennt sind. Insbesondere können die beiden Induktoren dann getrennt von zwei getrennten Stromquellen, vorzugsweise Wechselstromquellen, der elektrischen Versorgereinheit versorgt werden.

Außerdem wird vorgeschlagen, dass der erste Induktor (L1) und der zweite Induktor (L2) unterschiedliche Induktivitäten aufweisen. Dadurch können vorteilhaft unterschiedliche Stromwerte, insbesondere Effektivstromwerte, in den beiden Induktoren erreicht werden. Vorteilhaft wird von der Steuer- und/oder Regeleinheit als Führungsgröße für eine Steuerung und/oder Regelung der Induktoren in dem Erwärmungsbetrieb ein Stromeffektivwert der relativ zu der Aufnahmeöffnung der Werkzeugaufnahme gesehen obere Induktor, insbesondere der erste Induktor, herangezogen. Unter einer "Führungsgröße" soll in diesem Zusammenhang insbesondere ein Parameter verstanden werden, in Abhängigkeit von welchem, eine oder mehrere weitere Parameter, beispielsweise ein Aktivierungszeitraum des zweiten Induktors, bestimmt wird. Insbesondere ist denkbar, dass mehr als eine Führungsgröße existiert. Außerdem können vorteilhaft unterschiedliche Energien durch die beiden Induktoren übertragen werden. Insbesondere können dadurch vorteilhafte Erwärmungs- und/oder Energieübertragungseigenschaften hinsichtlich eines Schrumpfspannens erreicht werden, insbesondere wenn die Werkzeugaufnahme entlang einer Axialrichtung des Aufnahmebereichs unterschiedliche Materialstärken aufweist. Vorteilhaft kann eine besonders präzise und gleichmäßige, insbesondere radiale, Ausdehnung der Werkzeugaufnahme gewährleistet werden. Insbesondere kann ein gewünschtes Verhältnis zwischen L1 und L2 unter anderem durch unterschiedliche Windungszahlen erreicht werden.

Ferner wird vorgeschlagen, dass der in dem Erwärmungsbetrieb in Axialrichtung der Induktionsheizeinheit näher an einer Werkzeugaufnahmeöffnung der Werkzeugaufnahme angeordnete erste Induktor eine Induktivität aufweist, welche zumindest um 3 %, vorzugsweise zumindest um 5 %, vorteilhaft zumindest um 10 % und bevorzugt zumindest um 15 % größer oder kleiner ist als eine Induktivität des in dem Erwärmungsbetrieb in Axialrichtung der Induktionsheizeinheit weiter von der Werkzeugaufnahmeöffnung entfernt angeordneten zweiten Induktors. Dadurch können insbesondere vorteilhafte Erwärmungs- und/oder Energieübertragungseigenschaften hinsichtlich eines Schrumpfspannens erreicht werden. Vorteilhaft können unterschiedliche, vorzugsweise auf ein Schrumpfspannen von gängigen Werkzeughaltertypen angepasste, Stromwerte, insbesondere Effektivstromwerte, in den beiden Induktoren erreicht werden. Vorteilhaft kann eine Steuerung und/oder Regelung der Induktoren dadurch erleichtert werden. Vorzugsweise ist bei einer Parallelschaltung zweier unterschiedlich betreibbarer Induktoren die Induktivität des zweiten Induktors größer als die Induktivität des ersten Induktors (L2 > L1; L2 = (1,03 bis 1,15) * L1). Eine umgekehrte Situation ist jedoch auch denkbar. Insbesondere bei in Serie geschalteten Induktoren ist auch denkbar, dass die Induktivität des zweiten Induktors kleiner ist als die Induktivität des ersten Induktors (L2 < L1). Prinzipiell ist alternativ auch denkbar, dass die Induktivitäten der beiden Induktoren zumindest im Wesentlichen gleich groß sind oder, dass der zweite Induktor eine größere Induktivität aufweist als der erste Induktor, wodurch jedoch die Steuerung der beschriebenen Abläufe erschwert wird. Insbesondere ist bei einer getrennten Einstellbarkeit der Pulsbreiten der Wechselströme der beiden Induktoren (in dem Fall in dem kein gemeinsamer elektrischer Punkt der Induktoren existiert) das Verhältnis der Induktivitäten der Induktoren nebensächlich, da dieses einfach durch die Pulsbreiten kompensiert werden könnte. Im Fall eines gemeinsamen elektrischen Punkts der beiden Induktoren können jedoch die Induktoren nur mit Wechselströmen mit identischen Pulsbreiten betrieben werden. Demnach ist in diesem Fall eine Anpassung/Unterschiedlichkeit der Induktivitäten vorteilhaft.

Zusätzlich wird vorgeschlagen, dass die elektrische Versorgereinheit dazu vorgesehen ist, zumindest einen der Induktoren, vorzugsweise zumindest den zweiten Induktor, paketweise und/oder gepulst zu betreiben. Dadurch können insbesondere vorteilhafte Erwärmungs- und/oder Energieübertragungseigenschaften hinsichtlich eines Schrumpfspannens erreicht werden. Vorteilhaft können unterschiedliche, vorzugsweise auf ein Schrumpfspannen von gängigen Werkzeughaltertypen angepasste, vorzugsweise verschiedene Teilungsverhältnisse aufweisende, Energiemengen durch die beiden Induktoren übertragen werden. Unter einem "paketweisen Betreiben" soll insbesondere ein Ein- und Ausschalten des Induktors vor einem Ausschalten des anderen Induktors verstanden werden. Das paketweise Betreiben kann ein oder mehrere "An"-Phasen des Induktors umfassen. Vorzugsweise umfasst das paketweise Betreiben eine Folge von periodischen oder aperiodischen "An"-Phasen des Induktors. Unter einem "gepulsten Betreiben" soll insbesondere der Betrieb mit der periodischen Folge von "An"-Phasen des Induktors verstanden werden. Je nach Tastgrad ("duty cycle") des paketweisen und/oder gepulsten Betriebs kann eine gewünschte übertragene Energiemenge eingestellt werden, insbesondere ohne einen Stromwert, insbesondere Effektivstromwert des Wechselstroms, oder eine Spannung, insbesondere Effektivspannung einer Wechselspannung, variieren zu müssen. Insbesondere stellt der Tastgrad einen zusätzlichen Prozessparameter dar, welcher selbst keine Führungsgröße ausbildet, jedoch vorzugsweise in Abhängigkeit von der Führungsgröße gesteuert und/oder geregelt ist.

Wenn die elektrische Versorgereinheit dazu vorgesehen ist, eine an die Werkzeugaufnahme übertragene Gesamtenergiemenge, insbesondere abschnittsweise, zu steuern und/oder zu regeln, kann vorteilhaft ein effektives und zeit- und energiesparendes Ein- und Ausspannen von Werkzeugen ermöglicht werden. Vorteilhaft wird nur genau so viel Energie übertragen wie nötig ist, um den Aufnahmebereich gleichmäßig und ausreichend aufzudehnen, um ein Werkzeug einzuführen oder zu entnehmen. Vorteilhaft kann eine Lebensdauer der Werkzeugaufnahmen erhöht werden. Insbesondere weist die Induktionsheizvorrichtung zumindest eine Energiemesseinheit auf. Insbesondere ist die Energiemesseinheit zumindest dazu vorgesehen, eine von dem ersten Induktor übertragene Energie während eines Erwärmungsbetriebs zu ermitteln. Insbesondere ist die Energiemesseinheit zumindest dazu vorgesehen, eine von dem zweiten Induktor übertragene Energie während eines Erwärmungsbetriebs zu ermitteln. Insbesondere ist die Energiemesseinheit dazu vorgesehen, eine Gesamtenergie, die dem Zwischenkreis entnommen wird, zu ermitteln, vorzugsweise unabhängig davon, ob nur ein Induktor oder mehrere Induktoren in Betrieb sind. Vorzugsweise ist die Energiemesseinheit dazu vorgesehen, eine aus einem Stromnetz entnommene Wirkleistung zu erfassen. Insbesondere ist die Steuer- und/oder Regeleinheit dazu vorgesehen, anhand der Messdaten der Energiemesseinheit die Induktoren zu steuern und/oder zu regeln, insbesondere den Stromfluss an die Induktoren zu aktivieren oder zu stoppen und/oder ein Aktivierungsschema des gepulsten oder des paketweisen Betriebs zumindest eines Induktors festzulegen, zu steuern und/oder zu regeln. Unter einer "abschnittsweisen" Steuerung und/oder Regelung der Gesamtenergiemenge soll insbesondere eine Einzelsteuerung der durch die einzelnen Induktoren übertragenen Energie verstanden werden. Insbesondere ist die elektrische Versorgereinheit dazu vorgesehen, einen Stromwert, insbesondere Effektivstromwert des Wechselstroms, welcher an den Induktoren, insbesondere zumindest an einem der Induktoren, anliegt zu steuern und/oder zu regeln. Insbesondere ist denkbar, dass während eines Erwärmungsvorgangs einer Werkzeugaufnahme ein Stromwert, insbesondere ein Effektivstromwert des Wechselstroms, änderbar ist. Beispielsweise könnte der Stromwert, insbesondere der Effektivstromwert des Wechselstroms, des ersten Induktors nach einem Abschalten des zweiten Induktors geändert, insbesondere erhöht oder gesenkt, werden. Insbesondere erfolgt eine Änderung des Stromwerts, insbesondere des Effektivstromwerts des Wechselstroms, durch eine Steuerung und/oder Regelung der elektrischen Versorgereinheit. Vorzugsweise ist die elektrische Versorgereinheit dazu vorgesehen, den Stromwert, insbesondere Effektivstromwert des Wechselstroms, welcher an den Induktoren, insbesondere zumindest an einem der Induktoren, anliegt, konstant zu halten. Vorteilhaft bildet der konstante Stromwert, insbesondere Effektivstromwert eine Basis für die, insbesondere energiegesteuerte, Ansteuerung der Induktoren. Dadurch kann vorteilhaft ein Einfluss unterschiedlicher Leitungslängen (Spannungsabfall) oder von Spannungsschwankungen automatisch ausgeglichen werden. Insbesondere stellt sich bei einem konstant gehaltenen Stromwert, insbesondere Effektivstromwert, eines Induktors, vorzugsweise des ersten Induktors (I_{rmsL1} = konstant), und bei vorteilhafter Frequenz- und/oder Pulsbreitengleichheit der beiden Induktoren, ein Stromwert, insbesondere Effektivstromwert, des zweiten Induktors (I_{rmsL2}) ein, welcher proportional zu einem umgekehrten Verhältnis der Induktivitäten der beiden Induktoren ist (I_{rmsL2} = I_{rmsL1 *} (L1/L2)). Insbesondere wird in diesem Fall der Stromwert, insbesondere Effektivstromwert, als Führungsgröße herangezogen, insbesondere als Führungsgröße der Steuerung und/oder der Regelung der Stromversorgung der beiden Induktoren. Alternativ oder zusätzlich ist eine reine Zeitsteuerung der Induktoren denkbar. Insbesondere ist dabei denkbar, dass die elektrische Versorgereinheit dazu vorgesehen ist, eine Gesamterwärmungszeit der Induktoren, vorzugsweise "An"-Zeiten der einzelnen Induktoren, zu steuern und/oder zu regeln. Dadurch wird der Erwärmungsvorgang vorteilhaft erleichtert, jedoch ist der Energieübertrag weniger genau anpassbar. Insbesondere ist die Gesamtenergiemenge, insbesondere die Einzelenergiemengen, und/oder die Gesamterwärmungszeit, insbesondere die Einzelerwärmungszeiten der Induktoren, abhängig von dem jeweiligen Werkzeugaufnahmetyp und/oder einer Größe der Werkzeugaufnahme.

Wenn die beiden Induktoren, welche unterschiedliche Anzahlen an Windungen aufweisend, elektrisch in Reihe geschaltet sind, kann vorteilhaft eine besonders einfache übertragungsenergieoptimierte Ausgestaltung der Induktionsheizvorrichtung ermöglicht werden. Vorteilhaft kann, insbesondere gezielt, eine unterschiedliche Energie an unterschiedliche Teilbereiche der Werkzeugaufnahme übertragen werden, ohne eine spezielle Steuerung und/oder Regelung für die beiden einzelnen Induktoren zu benötigen. Beispielsweise kann eine Induktionsheizeinheit mit den elektrisch in Serie geschalteten, unterschiedliche Windungszahlen aufweisenden Induktoren eine "Low-Budget"-Version der Induktionsheizeinheit mit den elektrisch parallel geschalteten, unterschiedlich betreibbaren Induktoren ausbilden, welche vergleichbare Vorteile mit einer reduzierten Flexibilität bezogen auf unterschiedlich geformte Werkzeugaufnahmen aufweist. Insbesondere für Anwender, welche nur wenige verschiedene Werkzeugfutterformen verwenden, können dadurch Anschaffungskosten gering gehalten werden. Insbesondere ist denkbar, dass ein Verhältnis der Anzahlen der Windungen der beiden Induktoren, insbesondere abhängig von einem Kundenwunsch, auf spezielle Werkzeugfutterformen optimiert wird/ist. Insbesondere können die in Reihe geschalteten Induktoren eng aneinander anliegend oder mit einem Abstand zueinander in der Induktionsheizeinheit angeordnet sein. Vorzugsweise weist in dem Fall in dem die Induktoren in Reihe geschaltet sind der Induktor, der mehr Windungen aufweist als der andere Induktor, eine zumindest 3 %, vorzugsweise zumindest 10% und bevorzugt zumindest 20% größere Induktivität auf als der andere Induktor.

Wenn zudem der in einem Erwärmungsbetrieb weiter von der Werkzeugaufnahmeöffnung der Werkzeugaufnahme entfernte Induktor der beiden Induktoren die kleinere Anzahl an Windungen aufweist, kann vorteilhaft eine optimierte Erwärmung zur Aufweitung des Aufnahmebereichs einer Werkzeugaufnahme mit einem zu einer Werkzeugaufnahmeöffnung hin abnehmenden Durchmesser, insbesondere einer konische Werkzeugaufnahme, ermöglicht werden. Derartige konische Werkzeugaufnahmen sind die gegenwärtig am häufigsten verwendeten Schrumpffutter. Unter der "Werkzeugaufnahmeöffnung" einer Werkzeugaufnahme soll insbesondere ein Ende des Aufnahmebereichs der Werkzeugaufnahme, welches nach außen hin offen ist, so dass ein Werkzeug durch die Werkzeugaufnahmeöffnung in den Aufnahmebereich verbracht werden kann, verstanden werden.

Ferner wird vorgeschlagen, dass die elektrische Versorgereinheit dazu vorgesehen ist, den ersten Induktor und den zweiten Induktor mit einer Frequenz zwischen 5 kHz und 70 kHz, vorzugsweise zwischen 8 kHz und 50 kHz, zu betreiben. Dadurch kann vorteilhaft eine hohe Flexibilität bezüglich eines Schrumpfspannens von Werkzeugen in/aus Werkzeugaufnahmen mit verschiedenen Materialien, insbesondere mit verschiedenen leitfähigen Materialien, vorzugswiese mit verschiedenen Metallen, erreicht werden. Vorteilhaft können dadurch sowohl ferromagnetische als auch para- oder diamagnetische Werkstoffe induktiv erwärmt werden. Insbesondere weist die elektrische Versorgereinheit eine Frequenzerzeugungseinheit auf, welche dazu vorgesehen ist, Strompulse mit Frequenzen zwischen 5 kHz und 70 kHz, vorzugsweise zwischen 8 kHz und 50 kHz, zu erzeugen. Insbesondere ist die Frequenzerzeugungseinheit zu einer abgestuften oder vorzugsweise stufenlosen Modulation und/oder Einstellung der Frequenz des an die Induktoren übertragenen Wechselstroms zumindest im Bereich zwischen 5 kHz und 70 kHz, vorzugsweise zwischen 8 kHz und 50 kHz, vorgesehen. Insbesondere ist die elektrische Versorgereinheit, vorzugsweise die Frequenzerzeugungseinheit, zu einer abgestuften oder vorzugsweise stufenlosen Modulation und/oder Einstellung der Pulsweise des an die Induktoren übertragenen Wechselstroms zumindest im Bereich 0 und 1000 ‰, vorzugsweise mit einer Genauigkeit im Promillebereich, vorgesehen. Vorzugsweise ist die elektrische Versorgereinheit als eine mittelfrequente elektrische Versorgereinheit ausgebildet. Bevorzugt ist die elektrische Versorgereinheit auch dazu vorgesehen, nur einen der beiden Induktoren, beispielsweise nur den ersten Induktor, mit der Frequenz zwischen 5 kHz und 70 kHz, vorzugsweise zwischen 8 kHz und 50 kHz, zu betreiben, insbesondere auch dann, wenn der andere Induktor, beispielsweise der zweite Induktor, ausgeschaltet ist.

Des Weiteren wird vorgeschlagen, dass die elektrische Versorgereinheit dazu vorgesehen ist, bei einem Abschalten von zumindest einem der beiden Induktoren eine Stromzufuhr an den Induktor derart zu steuern, dass eine wesentliche Entmagnetisierung des Werkzeugs und/oder der Werkzeugaufnahme erfolgt. Dadurch kann vorteilhaft eine Entmagnetisierung des Werkzeugs und/oder der Werkzeugaufnahme vor einem Einsatz des Werkzeugs und/oder der Werkzeugaufnahme erreicht werden. Vorteilhaft kann dadurch eine hohe Betriebssicherheit und/oder Benutzerfreundlichkeit erreicht werden. Beispielsweise haften an einem entmagnetisierten Werkzeug und/oder an einer entmagnetisierten Werkzeugaufnahme Späne aus magnetischen Materialien nicht an. Insbesondere ist die elektrische Versorgereinheit zur Entmagnetisierung dazu vorgesehen, ein abruptes "auf-Null-fallen" des Stromwerts eines Induktors, insbesondere zumindest des ersten Induktors, bei einem Abschalten des Stroms des Induktors zu verhindern. Insbesondere ist die elektrische Versorgereinheit dazu vorgesehen, den Stromwert des Induktors, insbesondere zumindest des ersten Induktors, bei dem Abschalten des Stroms des Induktors in einem endlichen Zeitraum, vorzugsweise in einem Zeitraum von zumindest 10 ms, vorzugsweise zumindest 30 ms und bevorzugt zumindest 50 ms, insbesondere (zumindest nahezu) kontinuierlich oder stufenweise mit einer Vielzahl kleiner Stufen (Digitalsteuerung), zu Null laufen zu lassen.

Zudem wird vorgeschlagen, dass der erste Induktor und der zweite Induktor eng aneinander anliegend in der Induktionsheizeinheit angeordnet sind. Dadurch kann vorteilhaft eine gute und/oder enge magnetische Kopplung der elektromagnetischen Wechselfelder der Induktoren erreicht werden. Darunter, dass die Induktoren "eng aneinander anliegend" angeordnet sind, soll in diesem Zusammenhang insbesondere verstanden werden, dass die Induktoren einen Abstand voneinander in Richtung einer Spulenachse der Induktoren aufweisen, welche kleiner als 3 cm, vorzugsweise kleiner als 1,5 cm, vorteilhaft kleiner als 0,5 cm und bevorzugt kleiner als 0,2 cm ist. Besonders bevorzugt berühren sich die beiden Induktoren an zumindest einer Stelle.

Außerdem wird vorgeschlagen, dass die Induktionsheizeinheit frei ist von zwischen dem ersten Induktor und dem zweiten Induktor angeordneten Feldformerelementen. Dadurch kann vorteilhaft eine, insbesondere mechanisch, besonders einfache und/oder besonders kostengünstige Ausgestaltung der Induktionsheizeinheit erreicht werden. Unter einem "Feldformerelement" soll insbesondere ein Element verstanden werden, welches dazu vorgesehen ist, ein Magnetfeld, insbesondere Magnetfeldlinien eines Magnetfelds, gezielt zu leiten und/oder zu lenken. Insbesondere ist die Induktionsheizeinheit frei von einem zwischen dem ersten Induktor und dem zweiten Induktor angeordneten, aus einem magnetisch leitenden (magnetische Permeabilität µᵣ > 1) und zugleich elektrisch nichtleitenden Material ausgebildeten Feldformerelement. Vorzugsweise ist die Induktionsheizeinheit frei von einem zwischen dem ersten Induktor und dem zweiten Induktor angeordneten, aus einem ferritischen Werkstoff, beispielsweise NiZn, MnZn oder einem Pulververbundwerkstoff auf Eisenoxydbasis, ausgebildeten Feldformerelement. Eine Anordnung derartiger oder weiterer Feldformerelemente oberhalb und/oder unterhalb beider, vorzugsweise aller, Induktoren der Induktionsheizeinheit sind jedoch denkbar.

Wenn der erste Induktor und der zweite Induktor einen gemeinsamen Wickelkörper aufweisen, kann vorteilhaft eine enge magnetische Kopplung auf einfache Weise ermöglicht werden. Zudem kann vorteilhaft eine kostengünstige und/oder effiziente Produktion ermöglicht werden. Insbesondere ist der gemeinsame Wickelkörper zumindest teilweise aus einem thermisch isolierenden und thermisch beständigen Material ausgebildet. Beispielsweise ist der gemeinsame Wickelkörper aus einem Polyamid (PA)-Kunststoff ausgebildet, welcher vorzugsweise bis 240°C hitzebeständig ist bei Dauerkontakt mit einer Hitzequelle. Alternativ könnte der gemeinsame Wickelkörper auch aus einem besonders hitzebeständigen Kunststoff wie Polyetheretherketon (PEEK) oder aus einer Keramik ausgebildet sein. Insbesondere ist auch denkbar, dass der gemeinsame Wickelkörper trennbar ausgebildet ist. Dadurch kann vorteilhaft eine Trennung und/oder ein Wechsel zumindest eines der beiden Induktoren ermöglicht werden. Alternativ ist jedoch auch denkbar, dass die beiden Induktoren auf zwei komplett voneinander getrennt ausgebildeten Wickelkörpern aufgewickelt sind. Dadurch könnte vorteilhaft eine besonders hohe Modularität der Induktionsheizeinheit erreicht werden.

Wenn außerdem der erste Induktor und der zweite Induktor zueinander überlappungsfrei gewickelt sind, kann vorteilhaft eine einfache Trennbarkeit der Induktoren ermöglich werden. Zudem kann dadurch eine für bestimmte Werkzeugfutter vorteilhafte Magnetfeldkonfiguration erreicht werden. Insbesondere sind der erste Induktor und der zweite Induktor zueinander überlappungsfrei auf dem gemeinsamen Wickelkörper aufgewickelt. Alternativ ist jedoch auch denkbar, dass der erste Induktor und der zweite Induktor zueinander überlappungsfrei auf getrennten Wickelkörpern aufgewickelt sind.

Wenn stattdessen der erste Induktor und der zweite Induktor zueinander teilweise überlappend gewickelt sind, kann vorteilhaft eine besonders hohe Kompaktheit der Induktionsheizvorrichtung erreicht werden. Zudem kann dadurch eine für bestimmte Werkzeugfutter vorteilhafte Magnetfeldkonfiguration erreicht werden. Insbesondere können der erste Induktor und der zweite Induktor konisch oder stufenweise miteinander überlappend gewickelt sein. Insbesondere sind der erste Induktor und der zweite Induktor zueinander überlappend auf dem gemeinsamen Wickelkörper aufgewickelt.

Des Weiteren wird vorgeschlagen, dass eine gesamte Wickelhöhe der beiden Induktoren in einer Axialrichtung der Induktionsheizeinheit kleiner ist als eine maximale normierte Einspannlänge der, insbesondere durch die Induktionsheizeinheit thermisch spannbaren, Werkzeugaufnahmen, insbesondere kleiner ist als 50 mm. Dadurch kann vorteilhaft eine besonders gleichmäßige Erwärmung, d.h. thermische Ausdehnung, der Werkzeugaufnahme erreicht werden. Vorteilhaft kann dadurch ein Effekt einer Wärmeleitung innerhalb der Werkzeugaufnahme, welcher eine Erwärmung und Ausdehnung der Werkzeugaufnahme über einen direkt induktiv erwärmten Bereich hinaus erzeugt, miteinberechnet und/oder reduziert werden. Vorteilhaft kann dadurch ein Effekt von Streufeldern, welche eine Erwärmung und Ausdehnung der Werkzeugaufnahme über einen direkt induktiv erwärmten Bereich hinaus erzeugen, miteinberechnet und/oder reduziert werden. Vorteilhaft kann dadurch eine gezielte und/oder optimierte Steuerung und/oder Regelung des Erwärmungsvorgangs erreicht werden. Die normierte Einspannlänge der Werkzeugaufnahmen entspricht zumindest im Wesentlichen einer axialen Länge des Aufnahmebereichs der Werkzeugaufnahme.

Wenn zumindest der erste Induktor und/oder der zweite Induktor konisch und/oder gestuft gewickelt ist, kann vorteilhaft eine hohe Kompaktheit der Induktionsheizeinheit und/oder eine besonders vorteilhafte Magnetfeldkonfiguration für bestimmte Werkzeugfutter erreicht werden.

Ferner wird vorgeschlagen, dass die elektrische Versorgereinheit eine, insbesondere modifizierte, H-Brückenschaltung, insbesondere Dreiwege-H-Brückenschaltung, insbesondere mit zumindest zwei Wechselstromausgängen, umfasst. Dadurch kann vorteilhaft eine zumindest zeitlich unterschiedliche, frequenz-, phasen- und/oder pulsbreitengleiche Betreibbarkeit von zumindest zwei Induktoren ermöglicht werden. Vorteilhaft kann ermöglicht werden, einen der Induktoren zumindest zeitabschnittsweise auszuschalten, während der andere Induktor weiter in Betrieb bleibt. Vorteilhaft kann ein paketweiser Betrieb zumindest eines der beiden Induktoren ermöglicht werden, insbesondere während der andere Induktor kontinuierlich betrieben ist. Unter einer "modifizierten H-Brückenschaltung" soll insbesondere eine H-Brückenschaltung verstanden werden, welche verschieden ist von einer Zweiwegeschaltung und vorzugsweise verschieden ist von einer dreiphasigen Brückenschaltung, wie sie beispielsweise in Motorsteuerungen verwendet wird. Insbesondere ist die (modifizierte) H-Brückenschaltung als eine Dreiwegeschaltung ausgebildet, welche vorzugsweise zwei getrennt voneinander schaltbare, d.h. aktivier- und deaktivierbare, Wechselstromausgänge ausweist. Insbesondere weist die (modifizierte) H-Brückenschaltung drei elektrische Ausgänge, vorzugsweise mit einem gemeinsamen elektrischen Punkt auf. Insbesondere ist die elektrische Versorgereinheit, vorzugsweise zumindest die elektrische Schaltung der elektrischen Versorgereinheit, welche die Wechselströme für die beiden Induktoren erzeugt, frei von einem Schwingkreis. Alternativ oder zusätzlich kann die (modifizierte) H-Brückenschaltung auch mehr als drei Wege und/oder mehr als zwei Wechselstromausgänge umfassen. Insbesondere umfasst ein Leistungskreis der elektrischen Versorgereinheit einen Hardchopper. Insbesondere ist der Hardchopper dazu vorgesehen, aus einem Netzstrom einen Gleichstrom zu erzeugen, welcher anschließend von der (modifizierten) H-Brückenschaltung, insbesondere durch eine entsprechende Schaltung der (modifizierten) H-Brückenschaltung, in den Wechselstrom mit der gewünschten Frequenz umgewandelt wird. Insbesondere ist auch denkbar, dass die elektrische Versorgereinheit der Ausgestaltung mit den in Serie geschalteten Induktoren mit unterschiedlichen Windungszahlen eine H-Brückenschaltung umfasst, welche in diesem Fall dann insbesondere auch mit nur einem Wechselstromausgang ausgestattet sein kann. Zudem ist auch denkbar, dass beide, insbesondere zueinander parallel geschalteten, Induktoren mit nur einer normalen H-Brücke geschaltet werden, wobei einer der beiden Induktoren, insbesondere der zweite Induktor, in diesem Fall mit einem separaten, insbesondere externen oder internen, Schalter versehen ist, mit welchem der Induktor gesteuert und/oder geregelt zu- und/oder abgeschaltet werden kann.

Weiterhin wird vorgeschlagen, dass die Induktionsheizeinheit zumindest einen dritten Induktor umfasst, welcher mittels der elektrischen Versorgereinheit, insbesondere unterschiedlich zu zumindest einem der beiden anderen Induktoren, betreibbar ist. Dadurch können insbesondere vorteilhafte Erwärmungs- und/oder Energieübertragungseigenschaften hinsichtlich eines Schrumpfspannens erreicht werden. Vorteilhaft kann eine besonders effektive und/oder präzise Kontrolle über einen Erwärmungsvorgang einer Werkzeugaufnahme, insbesondere eines Schrumpfspannfutters, ermöglicht werden. Vorteilhaft kann eine besonders effektive und/oder präzise Kontrolle einer thermischen Aufweitung eines Aufnahmebereichs für Werkzeuge der Werkzeugaufnahme erreicht werden. Vorteilhaft können dadurch Schrumpfspannfutter mit außergewöhnlichen Formen und/oder mit Überlänge sicher und energieeffizient gespannt und/oder entspannt werden. Insbesondere kann der dritte Induktor, abhängig von einer Ausgestaltung der elektrischen Versorgereinheit, gemeinsam mit einem der Induktoren betreibbar oder zumindest zeitlich unterschiedlich zu beiden Induktoren betreibbar sein. Insbesondere ist die elektrische Versorgereinheit dazu vorgesehen, den dritten Induktor in Phase mit den beiden anderen Induktoren oder, falls einer der beiden anderen Induktoren inaktiv ist, mit dem weiteren der beiden anderen Induktoren zu betreiben. Insbesondere ist der dritte Induktor dazu vorgesehen, ein elektromagnetisches Wechselfeld zu erzeugen, welches richtungsgleich ist wie das elektromagnetische Wechselfeld des ersten Induktors und/oder das elektromagnetische Wechselfeld des zweiten Induktors. Vorzugsweise ist das elektromagnetische Wechselfeld des dritten Induktors im Erwärmungsbetrieb richtungsgleich wie die elektromagnetischen Wechselfelder der beiden anderen Induktoren. Insbesondere ist der dritte Induktor magnetisch eng mit dem ersten Induktor und/oder mit dem zweiten Induktor gekoppelt. Insbesondere ist denkbar, dass der dritte Induktor einen gemeinsamen elektrischen Punkt mit dem ersten Induktor und/oder mit dem zweiten Induktor aufweist. Insbesondere kann die elektrische Versorgereinheit dazu vorgesehen sein, den dritten Induktor paketweise und/oder gepulst zu betreiben. Insbesondere ist die elektrische Versorgereinheit dazu vorgesehen, den dritten Induktor mit einer Frequenz zwischen 5 kHz und 70 kHz zu betreiben. Insbesondere ist die Induktionsheizeinheit frei von zwischen dem dritten Induktor und einem der beiden anderen Induktoren angeordneten Feldformerelementen. Insbesondere ist der dritte Induktor in Axialrichtung neben den beiden anderen Induktoren oder zwischen den beiden anderen Induktoren angeordnet. Insbesondere weisen der erste Induktor, der zweite Induktor und der dritte Induktor zumindest im Wesentlichen identische Spulenachsen auf. Insbesondere sind die Windungen des ersten Induktors, des zweiten Induktors und/oder des dritten Induktors um zumindest im Wesentlichen identische Spulenachsen zentriert. Es ist denkbar, dass der dritte Induktor überlappungsfrei oder zumindest teilweise überlappend mit dem ersten Induktor und/oder mit dem zweiten Induktor gewickelt ist. Es ist denkbar, dass der dritte Induktor konisch und/oder gestuft gewickelt ist. Insbesondere weist die Induktionsheizeinheit mit drei Induktoren eine längere maximale Einspannlänge auf als die Induktionsheizeinheit mit zwei Induktoren.

Zudem wird vorgeschlagen, dass der dritte Induktor elektrisch parallel zu dem ersten Induktor und/oder dem zweiten Induktor zugeschaltet und/oder zuschaltbar ist. Dadurch kann vorteilhaft eine wahlweise Verlängerung einer Einspannlänge der Induktionsheizeinheit erreicht werden. Vorteilhaft kann eine besonders hohe Flexibilität erreicht werden. Insbesondere ist der dritte Induktor dazu vorgesehen, einen um einen Aufnahmebereich einer Werkzeugaufnahme angeordneten dritten Teilbereich der Werkzeugaufnahme, welcher in einem Erwärmungsbetrieb von dem dritten Induktor umgeben ist, zu erwärmen.

Außerdem wird vorgeschlagen, dass der dritte Induktor eine größere Induktivität (L3) aufweist als der erste Induktor und/oder als der zweite Induktor (L3 > L2 und (L3 > L1). Dadurch kann eine besonders vorteilhafte Erwärmung der Werkzeugaufnahme erreicht werden. Beispielsweise kann erreicht werden, dass der dritte Induktor einen unteren Teil der Werkzeugaufnahme nur leicht miterwärmt und dadurch Spannungen, insbesondere Axialspannungen, welche ein gleichmäßiges Ausdehnen des Aufnahmebereichs beeinträchtigen können, möglichst vermieden werden können.

Wenn zusätzlich zumindest einer der Induktoren zerstörungsfrei aus der Induktionsheizeinheit entnehmbar und/oder austauschbar ist, kann vorteilhaft eine hohe Modularität der Induktionsheizeinheit erreicht werden. Vorteilhaft kann eine Anpassung einer Zusammensetzung der Induktionsheizeinheit an eine bestimmte Werkzeugfuttergeometrie erreicht werden. Dadurch kann vorteilhaft ein Einspannvorgang und/oder ein Ausspannvorgang optimiert, insbesondere energieoptimiert und/oder zeitoptimiert, werden. Es ist denkbar, dass jeder Induktor separat zerstörungsfrei aus der Induktionsheizeinheit entnehmbar und/oder austauschbar und mit anderen Induktoren kombinierbar ist und/oder dass Pakete aus mehreren, beispielsweise aus zwei Induktoren oder aus drei Induktoren, gemeinsam zerstörungsfrei aus der Induktionsheizeinheit entnehmbar und/oder austauschbar sind.

Ferner wird ein Kit mit einer Induktionsheizeinheit der Induktionsheizvorrichtung und mit einer Mehrzahl unterschiedlich dimensionierter Induktoren und/oder unterschiedlichen Paketen von Induktoren, welche in verschiedenen Weisen in der Induktionsheizeinheit kombinierbar sind, vorgeschlagen. Vorteilhaft kann dadurch eine hohe Modularität der Induktionsheizeinheit erreicht werden. Vorteilhaft kann dadurch eine Anpassung einer Zusammensetzung der Induktionsheizeinheit an eine bestimmte Werkzeugfuttergeometrie erreicht werden.

Zusätzlich wird eine Ein- und/oder Ausschrumpfspannstation für Werkzeuge mit der Induktionsheizvorrichtung und/oder mit dem Kit vorgeschlagen. Dadurch können insbesondere vorteilhafte Erwärmungs- und/oder Energieübertragungseigenschaften hinsichtlich eines Schrumpfspannens erreicht werden. Vorteilhaft kann eine besonders effektive und/oder präzise Kontrolle über einen Erwärmungsvorgang einer Werkzeugaufnahme, insbesondere eines Schrumpfspannfutters, ermöglicht werden. Unter einer "Ein- und/oder Ausschrumpfspannstation für Werkzeuge" soll insbesondere eine Vorrichtung verstanden werden, welche dazu vorgesehen ist, den Einschrumpfvorgang und/oder den Ausschrumpfvorgang von Werkzeugen in Werkzeugaufnahmen zumindest zu einem Großteil automatisiert, vorzugsweise vollständig automatisiert, vorzunehmen. Der Einschrumpfvorgang umfasst insbesondere alle für eine Befestigung des Werkzeugs in der Werkzeugaufnahme notwendigen Schritte, insbesondere inklusive des Einsetzens des Werkzeugs und/oder der Werkzeugaufnahme in die Ein- und/oder Ausschrumpfspannstation. Der Ausschrumpfvorgang umfasst insbesondere alle für ein Lösen des Werkzeugs aus der Werkzeugaufnahme notwendigen Schritte, insbesondere inklusive des Entnehmens des Werkzeugs und/oder der Werkzeugaufnahme aus der Ein- und/oder Ausschrumpfspannstation. Insbesondere ist die Ein- und/oder Ausschrumpfspannstation für Werkzeuge auch zu einem Tausch von in einer Werkzeugaufnahme befindlichen Werkzeugen vorgesehen. Insbesondere kann die Ein- und/oder Ausschrumpfspannstation als ein integraler Bestandteil eines, insbesondere optischen, Mess- und/oder Einstellgeräts für Werkzeuge ausgebildet sein. Unter einem "Mess- und/oder Einstellgerät für Werkzeuge" soll insbesondere ein Gerät verstanden werden, welches zumindest dazu vorgesehen ist, zumindest eine Länge, zumindest einen Winkel, zumindest eine Kontur und/oder zumindest eine Außenform eines Werkzeugs zumindest teilweise zu erfassen und/oder einzustellen, vorzugsweise eine Einstellung, insbesondere eine Voreinstellung, eines Werkzeugs, insbesondere in der Werkzeugaufnahme, beispielsweise in Bezug auf eine zu der Werkzeugaufnahme relative Länge und/oder Lage vorzunehmen.

Des Weiteren wird ein Verfahren zum Betrieb der Induktionsheizvorrichtung für ein Ein- und/oder Ausschrumpfen von Werkzeugen in und/oder aus Werkzeugaufnahmen, mit der Induktionsheizeinheit, welche zumindest den ersten Induktor und zumindest den von dem ersten Induktor getrennt ausgebildeten zweite Induktor umfasst, wobei mittels des ersten Induktors und mittels des zweiten Induktors jeweils zumindest ein, insbesondere unterschiedlicher, Teil der Werkzeugaufnahme bei einem Ein- und/oder Ausschrumpfvorgang durch ein induktives Erhitzen aufgeweitet wird, wobei in einem Erwärmungsbetrieb zur Aufweitung einer Werkzeugaufnahme der erste Induktor und der zweite Induktor, insbesondere zumindest zeitlich, unterschiedlich betrieben und/oder angesteuert werden, vorgeschlagen. Dadurch können insbesondere vorteilhafte Erwärmungs- und/oder Energieübertragungseigenschaften hinsichtlich eines Schrumpfspannens erreicht werden. Vorteilhaft kann eine besonders effektive und/oder präzise Kontrolle über einen Erwärmungsvorgang einer Werkzeugaufnahme, insbesondere eines Schrumpfspannfutters, ermöglicht werden.

Wenn in dem Erwärmungsbetrieb zur Aufweitung der Werkzeugaufnahme einer der beiden Induktoren insgesamt länger bestromt wird als der andere Induktor, kann vorteilhaft ein Energieeintrag in die Werkzeugaufnahme optimiert werden, so dass eine besonders gleichmäßige Aufweitung des Aufnahmebereichs ermöglicht wird. Insbesondere wird zumindest der Induktor, welcher in dem Erwärmungsbetrieb näher an der Werkzeugaufnahmeöffnung des Aufnahmebereichs angeordnet ist, vorzugsweise der erste Induktor, länger bestromt als der/die weiteren Induktor/en, insbesondere der zweite Induktor. Dadurch kann vorteilhaft eine übermäßige Erwärmung des Teils der Werkzeugaufnahme mit der größeren Masse, welche insbesondere näher an einem Innendurchmesser der Induktoren angeordnet ist und deshalb bei gleichem elektromagnetischen Wechselfeld einen höheren Energieeintrag erfährt, verhindert werden.

Wenn zudem der Erwärmungsbetrieb zumindest eines der Induktoren nach Erreichen einer vorgegebenen, von dem Induktor an die Werkzeugaufnahme übertragenen Energie oder nach Erreichen eines vorgegebenen Anteils an einer vorgegebenen Gesamtenergie aller Induktoren automatisch beendet wird, kann vorteilhaft ein Energieverbrauch und/oder ein Zeitbedarf pro Spannvorgang optimiert, vorzugsweise erheblich reduziert, werden, insbesondere indem eine über das Notwendige hinaus gehende Erhitzung der Werkzeugaufnahme bei einem Spannvorgang (Temperatur und/oder Erhitzungsdauer) vermieden werden kann. Vorteilhaft kann eine Überhitzung und/oder eine mögliche Beschädigung der Werkzeugaufnahme verhindert werden. Alternativ ist auch denkbar, dass der Erwärmungsbetrieb zumindest eines der Induktoren nach Erreichen einer vorgegebenen Laufzeit eines oder mehrerer Induktoren automatisch beendet wird.

Die erfindungsgemäße Induktionsheizvorrichtung, das erfindungsgemäße Kit, die erfindungsgemäße Ein- und/oder Ausschrumpfspannstation und/oder das erfindungsgemäße Verfahren sollen hierbei nicht auf die oben beschriebene Anwendung und Ausführungsform beschränkt sein. Insbesondere kann die erfindungsgemäße Induktionsheizvorrichtung, das erfindungsgemäße Kit, die erfindungsgemäße Ein- und/oder Ausschrumpfspannstation und/oder das erfindungsgemäße Verfahren zu einer Erfüllung einer hierin beschriebenen Funktionsweise eine von einer hierin genannten Anzahl von einzelnen Elementen, Bauteilen, Verfahrensschritten und Einheiten abweichende Anzahl aufweisen.

### Zeichnungen

Weitere Vorteile ergeben sich aus der folgenden Zeichnungsbeschreibung. In den Zeichnungen sind acht Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische perspektivische Ansicht einer Ein- und/oder Ausschrumpfspannstation mit einer Induktionsheizvorrichtung,
- Fig. 2: eine schematische Schnittansicht einer Induktionsheizeinheit der Induktionsheizvorrichtung mit einer Werkzeugaufnahme,
- Fig. 3a: einen schematischen Schaltplan einer elektrischen Versorgereinheit der Induktionsheizvorrichtung,
- Fig. 3b: einen schematischen Schaltplan einer modifizierten H-Brückenschaltung der elektrischen Versorgereinheit,
- Fig. 3c: ein schematisches Strom-Zeit-Diagramm der Stromzufuhr eines der beiden Wechselstromausgänge der elektrischen Versorgereinheit,
- Fig. 4: ein schematisches Ablaufdiagramm eines Verfahrens zum Betrieb der Induktionsheizvorrichtung,
- Fig. 5a: ein schematisches Aktivitäts-Zeit-Diagramm von Induktoren der Induktionsheizeinheit,
- Fig. 5b: ein alternatives schematisches Aktivitäts-Zeit-Diagramm der Induktoren der Induktionsheizeinheit,
- Fig. 6: eine schematische Schnittansicht einer alternativen Induktionsheizeinheit einer alternativen Induktionsheizvorrichtung,
- Fig. 7: eine schematische Schnittansicht einer zweiten alternativen Induktionsheizeinheit einer zweiten alternativen Induktionsheizvorrichtung,
- Fig. 8a: einen schematischen Schaltplan einer elektrischen Versorgereinheit einer dritten alternativen Induktionsheizvorrichtung,
- Fig. 8b: einen schematischen Schaltplan von H-Brücken der dritten alternativen Induktionsheizvorrichtung,
- Fig. 9a: einen schematischen Schaltplan einer elektrischen Versorgereinheit einer vierten alternativen Induktionsheizvorrichtung,
- Fig. 9b: einen schematischen Schaltplan einer modifizierten H-Brückenschaltung der vierten alternativen Induktionsheizvorrichtung,
- Fig. 10a: einen schematischen Schaltplan einer elektrischen Versorgereinheit einer fünften alternativen Induktionsheizvorrichtung,
- Fig. 10b: einen schematischen Schaltplan einer modifizierten H-Brückenschaltung der fünften alternativen Induktionsheizvorrichtung,
- Fig. 11a: einen schematischen Schaltplan einer elektrischen Versorgereinheit einer sechsten alternativen Induktionsheizvorrichtung,
- Fig. 11b: einen schematischen Schaltplan einer modifizierten H-Brückenschaltung der sechsten alternativen Induktionsheizvorrichtung und
- Fig. 12: einen schematischen Schaltplan einer H-Brückenschaltung einer siebten alternativen Induktionsheizvorrichtung.

### Beschreibung der Ausführungsbeispiele

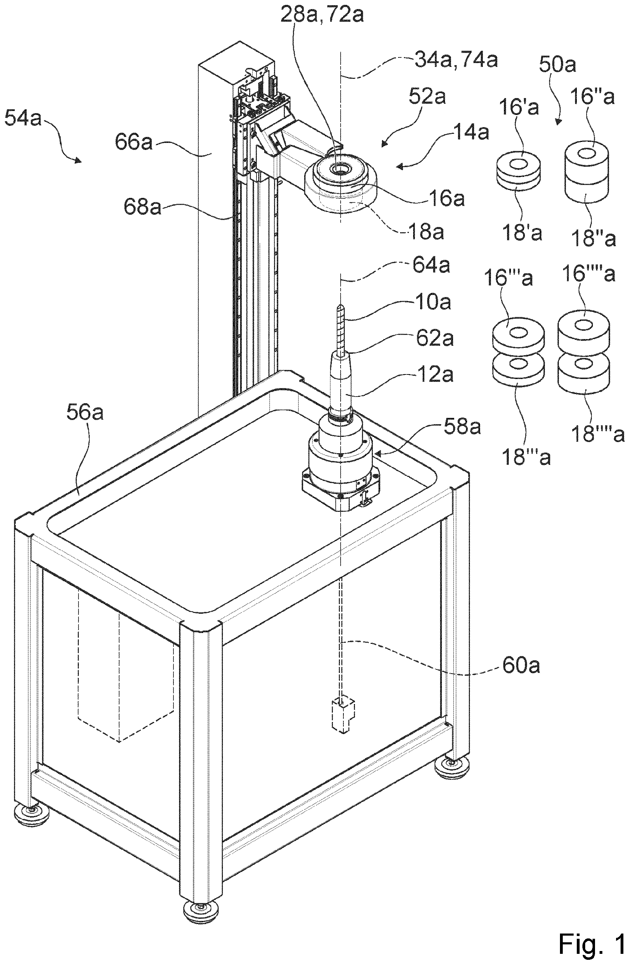

Die Fig. 1 zeigt eine Ein- und/oder Ausschrumpfspannstation 54a. Die Ein- und/oder Ausschrumpfspannstation 54a ist für Werkzeuge 10a vorgesehen. Die Ein- und/oder Ausschrumpfspannstation 54a ist als eine Schrumpfspannstation ausgebildet. Die Ein- und/oder Ausschrumpfspannstation 54a kann Teil eines Einstell- und/oder Messgeräts für Werkzeuge 10a und/oder Teil einer Multispann- und Mess- und/oder Einstellstation, wie sie beispielsweise in einer deutschen Patentanmeldung mit der Anmeldenummer 10 2019 115 607.6 beschrieben ist, sein.

Die Ein- und/oder Ausschrumpfspannstation 54a umfasst ein Basisgestell 56a an, in oder auf welchem die funktionalen Einheiten der Ein- und/oder Ausschrumpfspannstation 54a montiert sind. Die Ein- und/oder Ausschrumpfspannstation 54a umfasst eine Haltevorrichtung 58a für Werkzeugaufnahmen 12a. Die Haltevorrichtung 58a umfasst einen Längeneinstellpin 60a zu einer Voreinstellung einer Einstecktiefe für ein Werkzeug 10a in der Werkzeugaufnahme 12a. Der Längeneinstellpin 60a ist dazu vorgesehen, von unten in die Werkzeugaufnahme 12a eingeschoben zu werden und so einen Anschlag für ein Werkzeug 10a auszubilden, welches in einem Schrumpfspannvorgang in die Werkzeugaufnahme 12a eingeführt wird. Alternativ oder zusätzlich kann der Längeneinstellpin 60a in einem Ausspannvorgang dazu vorgesehen sein, von unten einen Druck auf ein Werkzeug 10a in der Werkzeugaufnahme 12a auszuüben, welcher das Werkzeug 10a aus der Werkzeugaufnahme 12a herausdrückt, sobald die Werkzeugaufnahme 12a weit genug thermisch aufgeweitet ist.

In der in Fig. 1 gezeigten Haltevorrichtung 58a ist die als Schrumpfspannfutter ausgebildete Werkzeugaufnahme 12a positioniert. In der in der Fig. 1 beispielhaft gezeigten Werkzeugaufnahme 12a ist ein beispielhaftes Werkzeug 10a fixiert. Das dargestellte Werkzeug 10a ist als ein Schaftwerkzeug, insbesondere als ein Spiralbohrer, ausgebildet. Das dargestellte Werkzeug 10a weist einen Werkzeugschaft 62a auf. Alternativ könnte das Werkzeug 10a auch als ein von einem Spiralbohrer verschiedenes Schaftwerkzeug (z.B. Fräser) ausgebildet sein. Das Werkzeug 10a ist dazu vorgesehen, in der Werkzeugaufnahme 12a befestigt, insbesondere thermisch eingespannt, zu werden. Die Werkzeugaufnahme 12a und das in der Werkzeugaufnahme 12a eingespannte Werkzeug 10a bilden eine montierte Werkzeugeinheit aus. Die Werkzeugaufnahme 12a weist einen zu erwärmenden Aufnahmebereich 28a auf. Der Aufnahmebereich 28a ist zu einer Aufnahme des Werkzeugschafts 62a vorgesehen. Der Aufnahmebereich 28a der Werkzeugaufnahme 12a, in dem das Werkzeug 10a bei einem Einschrumpfvorgang fixiert wird, ist parallel zu einer Rotationsachse 64a der Werkzeugaufnahme 12a ausgerichtet.

Die Ein- und/oder Ausschrumpfspannstation 54a umfasst eine Induktionsheizvorrichtung 52a. Die Ein- und/oder Ausschrumpfspannstation 54a umfasst einen Turm 66a. Der Turm 66a umfasst Lagerschienen 68a. Die Induktionsheizvorrichtung 52a ist linear entlang der Lagerschienen 68a auf- und ab bewegbar. Die Induktionsheizvorrichtung 52a ist entlang der Lagerschienen 68a auf die Haltevorrichtung 58a zu bewegbar. Die Ein- und/oder Ausschrumpfspannstation 54a kann eine Greifervorrichtung (nicht gezeigt), die dazu vorgesehen ist, ein Werkzeug 10a oder eine Werkzeugaufnahme 12a zu greifen und horizontal und vertikal relativ zu der Haltevorrichtung 58a zu bewegen, umfassen.

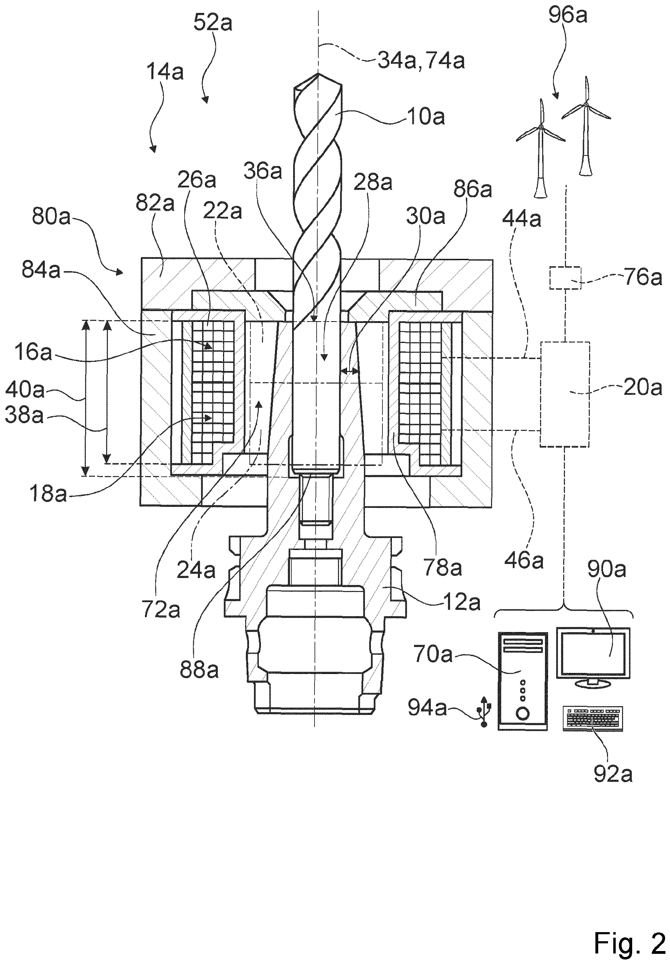

Die Induktionsheizvorrichtung 52a ist zu einem Ausschrumpfen von Werkzeugen 10a aus einer Werkzeugaufnahme 12a vorgesehen. Alternativ oder zusätzlich ist die Induktionsheizvorrichtung 52a zu einem Einschrumpfen von Werkzeugen 10a in eine Werkzeugaufnahme 12a vorgesehen. Die Induktionsheizvorrichtung 52a weist eine Induktionsheizeinheit 14a auf. Die Induktionsheizeinheit 14a umfasst einen ersten Induktor 16a. Die Induktionsheizeinheit 14a umfasst einen zweiten Induktor 18a. Der erste Induktor 16a und der zweite Induktor 18a sind getrennt voneinander ausgebildet. Die Induktoren 16a, 18a sind jeweils dazu vorgesehen, einen unterschiedlichen Teil der Werkzeugaufnahme 12a, insbesondere unterschiedliche Teilbereiche 22a, 24a (vgl. Fig. 2) der Werkzeugaufnahme 12a thermisch aufzuweiten. Der erste Induktor 16a und der zweite Induktor 18a erzeugen in einem Erwärmungsbetrieb richtungsgleiche Magnetfelder. Die Induktoren 16a, 18a sind dazu vorgesehen, jeweils unterschiedliche Energien an unterschiedliche Teilbereiche 22a, 24a der Werkzeugaufnahme 12a, welche in einem Erwärmungsbetrieb jeweils von den Induktoren 16a, 18a umgeben sind, abzugeben. Im dargestellten Fall ist der erste Induktor 16a dazu vorgesehen, Energie an den ersten Teilbereich 22a der Werkzeugaufnahme 12a abzugeben.

Der erste Teilbereich 22a der Werkzeugaufnahme 12a ist im dargestellten Fall als ein oberer, insbesondere dünnerer, Teilbereich der Werkzeugaufnahme 12a ausgebildet. In einem Erwärmungsbetrieb ist der erste Teilbereich 22a von dem ersten Induktor 16a umgeben. Im dargestellten Fall ist der zweite Induktor 18a dazu vorgesehen, Energie an den zweiten Teilbereich 24a der Werkzeugaufnahme 12a abzugeben. Der zweite Teilbereich 24a der Werkzeugaufnahme 12a ist im dargestellten Fall als ein unterer, insbesondere dickerer, Teilbereich der Werkzeugaufnahme 12a ausgebildet. In einem Erwärmungsbetrieb ist der zweite Teilbereich 24a von dem zweiten Induktor 18a umgeben.

Die Induktionsheizeinheit 14a ist dazu vorgesehen, über die Werkzeugaufnahme 12a und über das Werkzeug 10a gestülpt zu werden. Die Induktionsheizeinheit 14a bildet einen Arbeitsbereich 72a aus. Der Arbeitsbereich 72a der Induktionsheizeinheit 14a ist als eine zentrale, insbesondere vertikal ausgerichtete, vorzugsweise zumindest im Wesentlichen zylindrische oder konische, Öffnung in der Induktionsheizeinheit 14a ausgebildet. Die Öffnung des Arbeitsbereichs 72a erstreckt sich vollständig durch die Induktionsheizeinheit 14a. Der Arbeitsbereich 72a verläuft parallel zu einer Spulenachse 74a der Induktoren 16a, 18a. Der Arbeitsbereich 72a weist eine Axialrichtung 34a auf. Die Axialrichtung 34a des Arbeitsbereichs 72a verläuft parallel zu der Spulenachse 74a der Induktoren 16a, 18a. Der Arbeitsbereich 72a ist parallel zu der vorgesehenen Rotationsachse 64a der Werkzeugaufnahme 12a und/oder des Werkzeugs 10a ausgerichtet, insbesondere wenn die Werkzeugaufnahme 12a in den Arbeitsbereich 72a eingesteckt ist und/oder wenn die Werkzeugaufnahme 12a in der Haltevorrichtung 58a der Ein- und/oder Ausschrumpfspannstation 54a positioniert ist. Die Induktoren 16a, 18a sind zerstörungsfrei aus der Induktionsheizeinheit 14a entnehmbar. Die Induktoren 16a, 18a sind zerstörungsfrei austauschbar. Die Ein- und/oder Ausschrumpfspannstation 54a umfasst ein Kit 50a mit einer Mehrzahl an unterschiedlichen Induktoren 16a, 16'a, 16"a, 16‴a, 16ʺʺa, 18a, 18'a, 18"a, 18‴a, 18ʺʺa. Die unterschiedlichen Induktoren 16a, 16'a, 16"a, 16‴a, 16ʺʺa, 18a, 18'a, 18"a, 18‴a, 18ʺʺa des Kits 50a sind unterschiedlich dimensioniert, insbesondere unterschiedlich in einem Durchmesser oder in einer Länge. Die unterschiedlichen Induktoren 16a, 16'a, 16"a, 16‴a, 16ʺʺa, 18a, 18'a, 18"a, 18‴a, 18ʺʺa sind in verschiedenen Weisen in der Induktionsheizeinheit 14a kombinierbar. Alternativ ist jedoch auch denkbar, dass die Induktoren 16a, 18a fest in der Induktionsheizeinheit 14a montiert sind, so dass eine zerstörungsfreie Entnahme und/oder ein zerstörungsfreier Austausch nicht möglich ist.

Die Fig. 2 zeigt eine Schnittansicht der Induktionsheizeinheit 14a mit der Werkzeugaufnahme 12a und dem Werkzeug 10a (ungeschnitten). Die Werkzeugaufnahme 12a weist den Aufnahmebereich 28a auf. Das Werkzeug 10a ist vollständig in den Aufnahmebereich 28a eingesteckt. Der Aufnahmebereich 28a der Werkzeugaufnahme 12a weist an einem Ende eine Werkzeugaufnahmeöffnung 36a auf. Das Werkzeug 10a ist durch die Werkzeugaufnahmeöffnung 36a in den Aufnahmebereich 28a eingesteckt. Der Aufnahmebereich 28a weist eine normierte Einspannlänge 40a auf. Die normierte Einspannlänge 40a erstreckt sich von der Werkzeugaufnahmeöffnung 36a bis zu einem Anschlag 88a, welcher eine maximale Einstecktiefe des Aufnahmebereichs 28a vorgibt. Die beispielhaft gezeigte Werkzeugaufnahme 12a weist zumindest in einem Bereich um den Aufnahmebereich 28a herum eine konische Außenform auf. Die Werkzeugaufnahme 12a weist in dem Bereich um den Aufnahmebereich 28a herum eine variierende Materialstärke 30a auf. Die Materialstärke 30a der Werkzeugaufnahme 12a erhöht sich in eine von der Werkzeugaufnahmeöffnung 36a ausgehende, der Axialrichtung 34a folgende Richtung. Die Materialstärke 30a der Werkzeugaufnahme 12a erhöht sich nach unten hin.

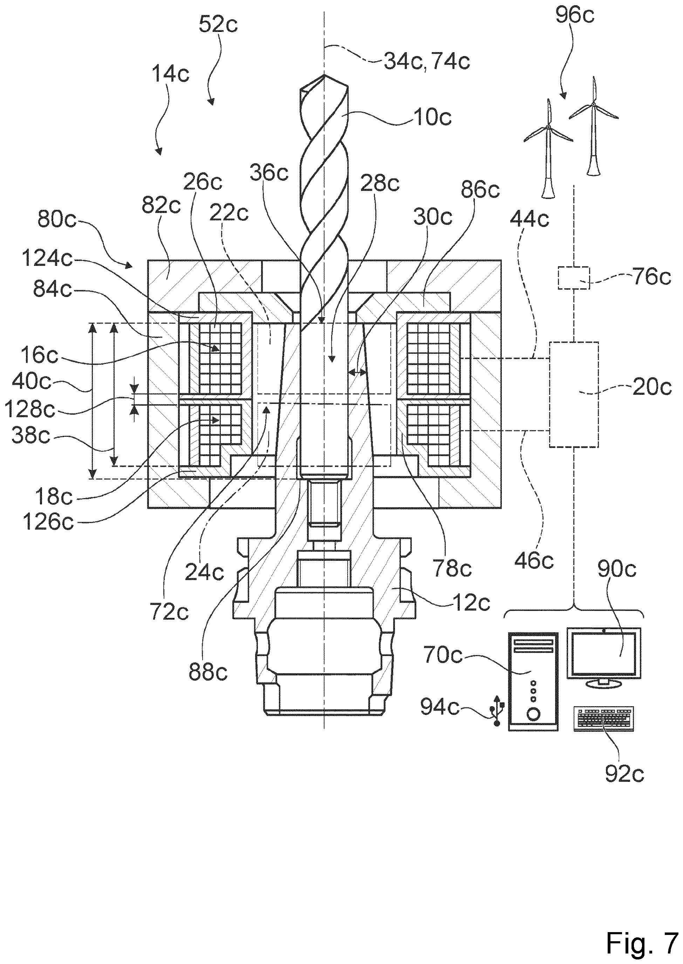

Die Induktoren 16a, 18a weisen jeweils Windungen 26a auf. In der Fig. 2 sind einzelne Windungen 26a schematisch als Kästchen dargestellt. Im dargestellten Fall sind die Anzahlen der Windungen 26a des ersten Induktors 16a und des zweiten Induktors 18a voneinander verschieden. Der in dem Erwärmungsbetrieb weiter von einer Werkzeugaufnahmeöffnung 36a der Werkzeugaufnahme 12a entfernte Induktor 16a, 18a der beiden Induktoren 16a, 18a weist eine größere Anzahl an Windungen 26a auf. Der zweite Induktor 18a weist im dargestellten Fall die größere Anzahl an Windungen 26a auf. Der zweite Induktor 18a weist im dargestellten Fall eine größere Induktivität auf als der erste Induktor 16a. Der erste Induktor 16a und der zweite Induktor 18a sind eng aneinander anliegend in der Induktionsheizeinheit 14a angeordnet. Der erste Induktor 16a und der zweite Induktor 18a berühren sich gegenseitig. Der erste Induktor 16a und der zweite Induktor 18a sind relativ zueinander unbeweglich und/oder ortsfest in der Induktionsheizeinheit 14a angeordnet. Die Induktionsheizeinheit 14a ist frei von zwischen Induktoren 16a, 18a, 48a (vgl. auch Fig. 7) angeordneten Feldformerelementen. Die Induktionsheizeinheit 14a ist frei von zwischen dem ersten Induktor 16a und dem zweiten Induktor 18a angeordneten Feldformerelementen. Auf einer radialen Außenseite sind die Induktoren 16a, 18a von einem ferritischen Element 86a bedeckt. Das ferritische Element 86a ist dazu vorgesehen, die Magnetfeldlinien des elektromagnetischen Wechselfelds der Induktoren 16a, 18a zu leiten.

Die Induktionsheizeinheit 14a weist einen gemeinsamen Wickelkörper 78a auf. Die Windungen 26a der Induktoren 16a, 18a sind auf den gemeinsamen Wickelkörper 78a aufgewickelt. Im dargestellten Fall sind der erste Induktor 16a und der zweite Induktor 18a zueinander überlappungsfrei gewickelt. In der Fig. 2 ist die Trennung zwischen den Induktoren 16a, 18a durch eine Linie mit erhöhter Linienstärke schematisch dargestellt. Im dargestellten Fall ist der gemeinsame Wickelkörper 78a unteilbar ausgebildet. Es ist jedoch auch denkbar, dass der gemeinsame Wickelkörper 78a teilbar ausgebildet ist oder dass jeder Induktor 16a, 18a einen separaten Wickelkörper aufweist. Die Windungen 26a der Induktoren 16a, 18a weisen zusammen eine gesamte Wickelhöhe 38a in der Axialrichtung 34a der Induktionsheizeinheit 14a auf. Die gesamte Wickelhöhe 38a der beiden Induktoren 16a, 18a ist kleiner ist als die maximale normierte Einspannlänge 40a der Werkzeugaufnahmen 12a. Die gesamte Wickelhöhe 38a der beiden Induktoren 16a, 18a ist kleiner als 50 mm. Die maximale normierte Einspannlänge 40a beträgt im dargestellten Fall zumindest 50 mm, vorzugsweise genau 50 mm.

Die Induktionsheizeinheit 14a weist eine Gehäuseeinheit 80a auf. Die Gehäuseeinheit 80a bildet eine äußere Hülle der Induktionsheizeinheit 14a aus. Die Gehäuseeinheit 80a umfasst einen Gehäusedeckel 82a und eine Gehäuseschale 84a. Die Induktoren 16a, 18a sind innerhalb der Gehäuseeinheit 80a angeordnet. Der Gehäusedeckel 82a ist zerstörungsfrei von der Gehäuseschale 84a abnehmbar. Dadurch kann vorteilhaft eine Entnahme und/oder ein Austausch der Induktoren 16a, 18a aus der Gehäuseschale 84a ermöglicht werden. Die Gehäuseeinheit 80a kann beispielsweise aus einem magnetfeldleitenden und/oder magnetfeldabschirmenden Material ausgebildet sein.

Die Induktionsheizvorrichtung 52a weist eine elektrische Versorgereinheit 20a auf. Die elektrische Versorgereinheit 20a ist dazu vorgesehen, den ersten Induktor 16a und den zweiten Induktor 18a unterschiedlich voneinander zu betreiben. Der erste Induktor 16a und der zweite Induktor 18a erzeugen in dem durch die elektrische Versorgereinheit 20a gesteuerten Erwärmungsbetrieb richtungsgleiche Magnetfelder. Die elektrische Versorgereinheit 20a ist dazu vorgesehen, den ersten Induktor 16a und den zweiten Induktor 18a zeitlich unterschiedlich zu betreiben. Die elektrische Versorgereinheit 20a ist im dargestellten Fall dazu vorgesehen, die beiden Induktoren 16a, 18a derart unterschiedlich zu betreiben, dass ein Energieeintrag in den ersten Teilbereich 22a der Werkzeugaufnahme 12a zu einem Energieeintrag in den zweiten Teilbereich 24a der Werkzeugaufnahme 12a ausbalanciert. Die Energieeinträge in den ersten Teilbereich 22a und in den zweiten Teilbereich 24a sind derart ausbalanciert, so dass eine Radialdehnung der Werkzeugaufnahme 12a in einem den gesamten Aufnahmebereich 28a der Werkzeugaufnahme 12a umgebenden Bereich der Werkzeugaufnahme 12a in dem Erwärmungsbetrieb zumindest im Wesentlichen gleich ist.

Die elektrische Versorgereinheit 20a ist dazu vorgesehen, den ersten Induktor 16a und den zweiten Induktor 18a in Phase zu betreiben. Die elektrische Versorgereinheit 20a ist dazu vorgesehen, den ersten Induktor 16a und den zweiten Induktor 18a frequenzgleich zu betreiben. Die elektrische Versorgereinheit 20a ist dazu vorgesehen, den ersten Induktor 16a und den zweiten Induktor 18a mit gleichen Pulsbreiten zu betreiben. Die elektrische Versorgereinheit 20a ist dazu vorgesehen, zumindest einen der Induktoren 16a, 18a paketweise und/oder gepulst zu betreiben. Die elektrische Versorgereinheit 20a ist dazu vorgesehen, zumindest den zweiten Induktor 18a paketweise und/oder gepulst zu betreiben. Die elektrische Versorgereinheit 20a ist dazu vorgesehen, eine an die Werkzeugaufnahme 12a übertragene Gesamtenergiemenge, insbesondere abschnittsweise, zu steuern und/oder zu regeln. Die elektrische Versorgereinheit 20a ist dazu vorgesehen, den zweiten Induktor 18a in Abhängigkeit von dem ersten Induktor 16a zu betreiben. Der Stromwert des ersten Induktors 16a bildet eine Führungsgröße für den Betrieb des zweiten Induktors 18a. Die elektrische Versorgereinheit 20a ist dazu vorgesehen, den ersten Induktor 16a und den zweiten Induktor 18a mit einer, insbesondere einstellbaren Frequenz zwischen 5 kHz und 70 kHz zu betreiben. Die elektrische Versorgereinheit 20a weist eine Steuer- und/oder Regeleinheit 70a auf. Die Steuer- und/oder Regeleinheit 70a kann als eine separate Steuer- und/oder Regeleinheit 70a der Induktionsheizvorrichtung 52a oder als eine Steuer- und/oder Regeleinheit 70a der Ein- und/oder Ausschrumpfspannstation 54a ausgebildet sein. Die Steuer- und/oder Regeleinheit 70a umfasst eine Ausgabeschnittstelle 90a, beispielsweise ein Anzeigesystem auf graphischer oder numerischer Basis und/oder eine Eingabeschnittstelle 92a, beispielsweise eine Tastatur oder einen Touchscreen. Die Steuer- und/oder Regeleinheit 70a umfasst eine Kommunikationsschnittstelle 94a, beispielsweise eine LAN-Verbindung oder eine Internetverbindung. Die elektrische Versorgereinheit 20a ist an eine Energiequelle 96a, beispielsweise ein öffentliches Stromnetz, angeschlossen. Die elektrische Versorgereinheit 20a weist eine Energiemesseinheit 76a auf. Die Energiemesseinheit 76a ist dazu vorgesehen, eine elektrische Energiemenge zu messen. Die Energiemesseinheit 76a ist dazu vorgesehen, eine Wirkleistung der Induktoren 16a, 18a zu messen. Die Energiemesseinheit 76a ist zwischen die Energiequelle 96a und die Induktoren 16a, 18a geschaltet. Die Energiemesseinheit 76a ist dazu vorgesehen, die aus dem öffentlichen Stromnetz durch die Induktoren 16a, 18a entnommene Wirkleistung zu messen.

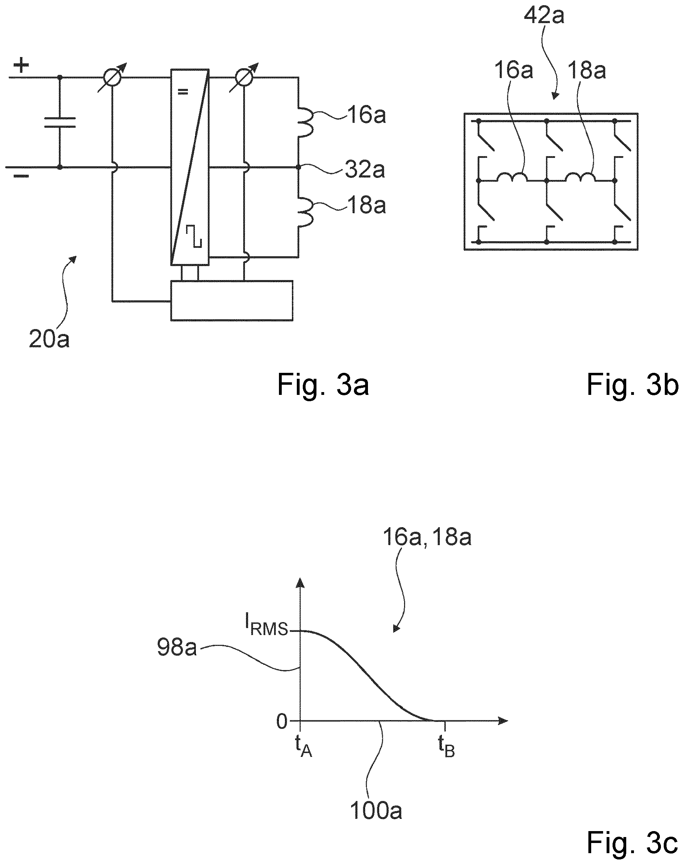

Die Figuren 3a und 3b zeigen schematische elektrische Schaltpläne der elektrischen Versorgereinheit 20a. Der erste Induktor 16a und der zweite Induktor 18a weisen unterschiedliche Induktivitäten auf. Der in einem Erwärmungsbetrieb in Axialrichtung 34a der Induktionsheizeinheit 14a näher an der Werkzeugaufnahmeöffnung 36a der Werkzeugaufnahme 12a angeordnete erste Induktor 16a weist eine Induktivität auf, welche zumindest um 3 % kleiner ist als eine Induktivität des in dem Erwärmungsbetrieb in Axialrichtung 34a der Induktionsheizeinheit 14a weiter von der Werkzeugaufnahmeöffnung 36a entfernt angeordneten zweiten Induktors 18a. Der erste Induktor 16a und der zweite Induktor 18a sind elektrisch parallelgeschaltet. Der erste Induktor 16a und der zweite Induktor 18a besitzen einen gemeinsamen elektrischen Punkt 32a. Die elektrische Versorgereinheit 20a umfasst eine H-Brückenschaltung 42a. Die elektrische Versorgereinheit 20a umfasst eine modifizierte H-Brückenschaltung 42a (vgl. Fig. 3b). Die modifizierte H-Brückenschaltung 42a bildet eine Dreiwegeschaltung aus. Die modifizierte H-Brückenschaltung 42a weist zwei Wechselstromausgänge 44a, 46a auf. Der erste Wechselstromausgang 44a ist zu einer Versorgung des ersten Induktors 16a mit Wechselstrom vorgesehen. Der zweite Wechselstromausgang 46a ist zu einer Versorgung des zweiten Induktors 18a mit Wechselstrom vorgesehen. Zumindest die Stromzufuhr durch den zweiten Wechselstromausgang 46a ist unabhängig von der Stromzufuhr durch den ersten Wechselstromausgang 44a an- und/oder ausschaltbar. Die Stromzufuhr durch die beiden Wechselstromausgänge 44a, 46a ist unabhängig voneinander schaltbar.

Die Fig. 3c zeigt ein schematisches Strom-Zeit-Diagramm der Stromzufuhr eines der beiden Wechselstromausgänge 44a, 46a bei einem Abschalten eines der Induktoren 16a, 18a. Der Stromeffektivwert Iᵣₘₛ des Wechselstromausgangs 44a, 46a ist dabei auf einer Ordinate 98a aufgetragen. Die Zeit ist dabei auf eine Abszisse 100a aufgetragen. Die elektrische Versorgereinheit 20a ist dazu vorgesehen, bei einem Abschalten von zumindest einem der beiden Induktoren 16a, 18a die Stromzufuhr an den Induktor 16a, 18a derart zu steuern, dass eine wesentliche Entmagnetisierung des Werkzeugs 10a und/oder der Werkzeugaufnahme 12a erfolgt. Die elektrische Versorgereinheit 20a ist dazu vorgesehen, bei einem Abschalten von zumindest einem der beiden Induktoren 16a, 18a die Stromzufuhr an den Induktor 16a, 18a derart zu steuern, dass der Stromeffektivwert Iᵣₘₛ in einem ausreichend langen Zeitraum (einige 10 Millisekunden) auf null abfällt anstatt schlagartig auf null zu springen.

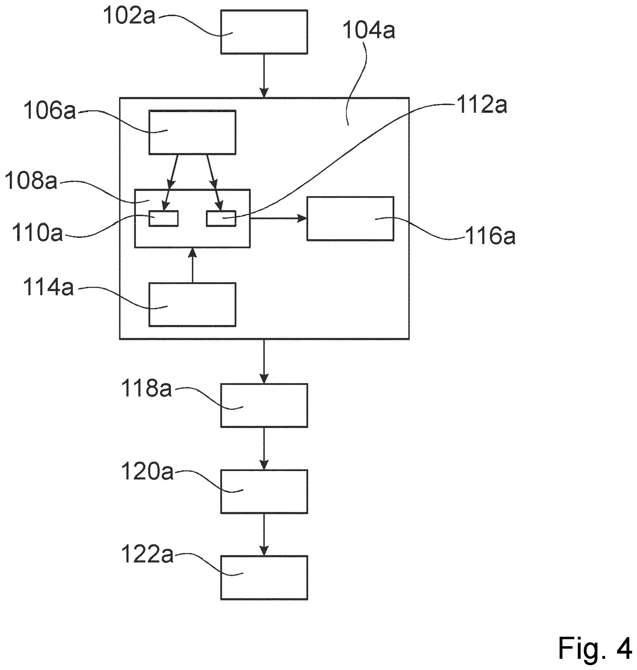

Die Fig. 4 zeigt ein schematisches Ablaufdiagramm eines Verfahrens zum Betrieb der Induktionsheizvorrichtung 52a für ein Ein- und/oder Ausschrumpfen von Werkzeugen 10a in und/oder aus Werkzeugaufnahmen 12a, wobei mittels des ersten Induktors 16a und mittels des zweiten Induktors 18a jeweils zumindest ein unterschiedlicher Teil der Werkzeugaufnahme 12a bei dem Ein- und/oder Ausschrumpfvorgang durch das induktive Erhitzen aufgeweitet wird. In zumindest einem Verfahrensschritt 102a wird die Induktionsheizeinheit 14a über die Werkzeugaufnahme 12a gestülpt, so dass der um den Aufnahmebereich 28a angeordnete Teil der Werkzeugaufnahme 12a im Inneren der Windungen 26a der Induktoren 16a, 18a angeordnet ist. In zumindest einem weiteren Verfahrensschritt 104a wird der Erwärmungsbetrieb gestartet. In dem Erwärmungsbetrieb wird zumindest der um den Aufnahmebereich 28a angeordnete Teil der Werkzeugaufnahme 12a durch Induktion erhitzt. Dabei dehnt sich das Material der Werkzeugaufnahme 12a rund um den Aufnahmebereich 28a aus, so dass der Aufnahmebereich 28a thermisch aufgeweitet wird. In dem Verfahrensschritt 104a werden in dem Erwärmungsbetrieb zur Aufweitung der Werkzeugaufnahme 12a der erste Induktor 16a und der zweite Induktor 18a unterschiedlich betrieben. In dem Verfahrensschritt 104a wird in dem Erwärmungsbetrieb zur Aufweitung der Werkzeugaufnahme 12a einer der beiden Induktoren 16a, 18a insgesamt länger bestromt als der andere der Induktoren 16a, 18a. In einem Teilverfahrensschritt 106a des Verfahrensschritts 104a werden die beiden Induktoren 16a, 18a eingeschaltet. Die beiden Induktoren 16a, 18a werden zumindest im Wesentlichen zeitgleich eingeschaltet. Die eingeschalteten Induktoren 16a, 18a werden mit einem, insbesondere mittelfrequenten, Wechselstrom bestromt und erzeugen jeweils elektromagnetische Wechselfelder welche mit dem Material der Werkzeugaufnahme 12a wechselwirken und das Material der Werkzeugaufnahme 12a erhitzen. Durch die Wechselwirkung der elektromagnetischen Wechselfelder mit der Werkzeugaufnahme 12a wird Energie von den Induktoren 16a, 18a an die Werkzeugaufnahme 12a übertragen. In dem Teilverfahrensschritt 106a des Verfahrensschritts 104a werden die Induktoren 16a, 18a stromgeregelt eingeschaltet, um Einschaltspitzen zu vermeiden. Dabei wird der Stromwert kontinuierlich, beispielsweise in einer Zeitspanne von 100 ms, bis zum gewünschten Wert erhöht.

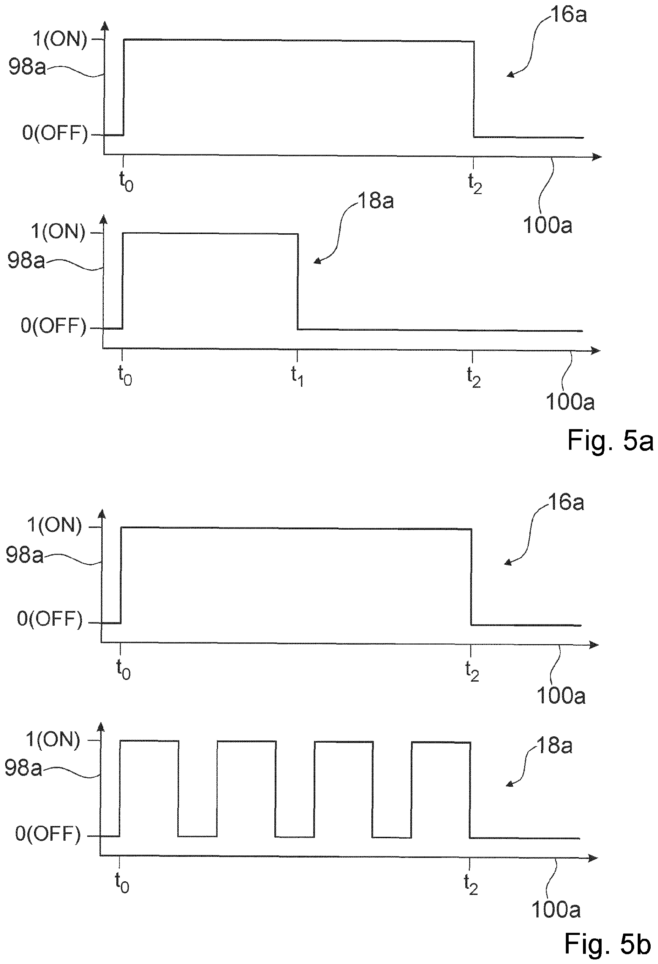

In einem weiteren Teilverfahrensschritt 108a des Verfahrensschritts 104a wird einer der Induktoren 16a, 18a abgeschaltet, während der andere der Induktoren 16a, 18a weiter eingeschaltet ist. In dem Teilverfahrensschritt 108a wird der eine der Induktoren 16a, 18a vor dem anderen der Induktoren 16a, 18a abgeschaltet, welcher in dem Teilbereich 22a, 24a der Werkzeugaufnahme 12a mit der höheren Materialstärke 30a angeordnet ist. Bei einer Werkzeugaufnahme 12a, wie sie in der Fig. 2 gezeigt ist, wird der zweite Induktor 18a, welcher in diesem Fall insbesondere unter dem ersten Induktor 16a angeordnet ist, vor dem ersten Induktor 16a abgeschaltet. Der Teilverfahrensschritt 108a umfasst zumindest zwei alternative Unterschritte 110a, 112a. In dem ersten alternativen Unterschritt 110a bleibt der zweite Induktor 18a bis zum Ende des Erwärmungsbetriebs ausgeschaltet (vgl. Fig. 5a). In dem zweiten alternativen Unterschritt 112a wird der zweite Induktor 18a paketweise ein- und ausgeschaltet, während der erste Induktor 16a kontinuierlich eingeschaltet ist (vgl. Fig. 5b). Durch das frühere Ausschalten des zweiten Induktors 18a oder durch das paketweise Betreiben des zweiten Induktors 18a wird u.a. ein Wärmeabfluss in der Werkzeugaufnahme 12a durch eine Wärmeleitung nach unten vorteilhaft reduziert. Durch das frühere Ausschalten des zweiten Induktors 18a oder durch das paketweise Betreiben des zweiten Induktors 18a wird u.a. eine Erwärmung der Werkzeugaufnahme 12a im zweiten Teilbereich 24a im Vergleich zur Erwärmung der Werkzeugaufnahme 12a im ersten Teilbereich 22a soweit reduziert, dass die Dehnung oder Aufweitung der Werkzeugaufnahme 12a über den ganzen Aufnahmebereich 28a vorteilhaft zumindest im Wesentlichen gleichmäßig ist. Insbesondere wäre durch die erhöhte Materialstärke 30a der Werkzeugaufnahme 12a in dem zweiten Teilbereich 24a eine absolute Dehnung bei gleicher Erwärmung (gleicher Temperatur) größer. Durch die beschriebene Steuerung kann eine Erwärmung des zweiten Teilbereichs 24a vorteilhaft so zu der Erwärmung des ersten Teilbereichs 22a balanciert werden, dass die Dehnungen zumindest im Wesentlichen gleich sind.

In zumindest einem weiteren Teilverfahrensschritt 114a des Verfahrensschritts 104a wird die Wirkleistung der Induktoren 16a, 18a gemessen. In Abhängigkeit von dem Messwert der Wirkleistung wird in dem Teilverfahrensschritt 108a der zweite Induktor 18a ausgeschaltet und/oder paketweise betrieben. Insbesondere wird eine Frequenz oder ein Tastgrad des paketweisen Betriebs in Abhängigkeit von dem Messwert der Wirkleistung gesteuert und/oder geregelt. In dem Teilverfahrensschritt 108a wird auf Basis der Messwerte der Wirkleistungsmessung der Erwärmungsbetrieb des zweiten Induktors 18a nach Erreichen eines vorgegebenen Anteils an einer vorgegebenen Gesamtenergie aller Induktoren 16a, 18a automatisch beendet. In zumindest einem weiteren Teilverfahrensschritt 116a des Verfahrensschritts 104a wird der weitere der Induktoren 16a, 18a ausgeschaltet. In dem weiteren Teilverfahrensschritt 116a wird der erste Induktor 16a ausgeschaltet. In dem weiteren Teilverfahrensschritt 116a wird der Erwärmungsbetrieb beendet. In dem weiteren Teilverfahrensschritt 116a wird der Erwärmungsbetrieb nach Erreichen einer vorgegebenen, von den Induktoren 16a, 18a an die Werkzeugaufnahme 12a übertragenen Gesamtenergie automatisch beendet. In einem weiteren Verfahrensschritt 118a wird das Werkzeug 10a in die Werkzeugaufnahme 12a eingesetzt (Einschrumpfvorgang) oder das Werkzeug 10a aus der Werkzeugaufnahme 12a entnommen, gegebenenfalls unter Mithilfe des Längeneinstellpins 60a. In zumindest einem weiteren Verfahrensschritt 120a wird die Induktionsheizeinheit 14a von der Werkzeugaufnahme 12a abgenommen. In zumindest einem weiteren, insbesondere optionalen, Verfahrensschritt 122a wird die Werkzeugaufnahme 12a aktiv gekühlt.

Die Fig. 5a zeigt ein Aktivitäts-Zeit-Diagramm des ersten Induktors 16a (oben) und des zweiten Induktors 18a (unten). Auf der Ordinate 98a ist ein Aktivitätsstatus der Induktoren 16a, 18a aufgetragen. Ein Wert "0" bedeutet, dass der Induktor 16a, 18a ausgeschaltet ist. Ein Wert "1" bedeutet, dass der Induktor 16a, 18a eingeschaltet ist. Die Zeit ist auf der Abszisse 100a aufgetragen. Der zweite Induktor 18a wird zum Zeitpunkt "t1" abgeschaltet. Der erste Induktor 16a wird zum Zeitpunkt "t2" abgeschaltet. Der zweite Induktor 18a wird vor dem ersten Induktor 16a abgeschaltet. Die Steuer- und/oder Regeleinheit 70a steuert und/oder regelt die "An"-Zeiten basierend auf Messwerten der Energiemesseinheit 76a oder basierend auf einer verstrichenen Zeit. Die Fig. 5b zeigt ein alternatives Aktivitäts-Zeit-Diagramm des ersten Induktors 16a (oben) und des zweiten Induktors 18a (unten). Auf der Ordinate 98a ist ein Aktivitätsstatus der Induktoren 16a, 18a aufgetragen. Ein Wert "0" bedeutet, dass der Induktor 16a, 18a ausgeschaltet ist. Ein Wert "1" bedeutet, dass der Induktor 16a, 18a eingeschaltet ist. Die Zeit ist auf der Abszisse 100a aufgetragen. Der zweite Induktor 18a wird paketweise betrieben. Der zweite Induktor 18a wird periodisch an- und ausgeschaltet. Die Steuer- und/oder Regeleinheit 70a steuert und/oder regelt die Periode und/oder den Tastgrad basierend auf Messwerten der Energiemesseinheit 76a oder basierend auf Voreinstellungen durch einen Benutzer.

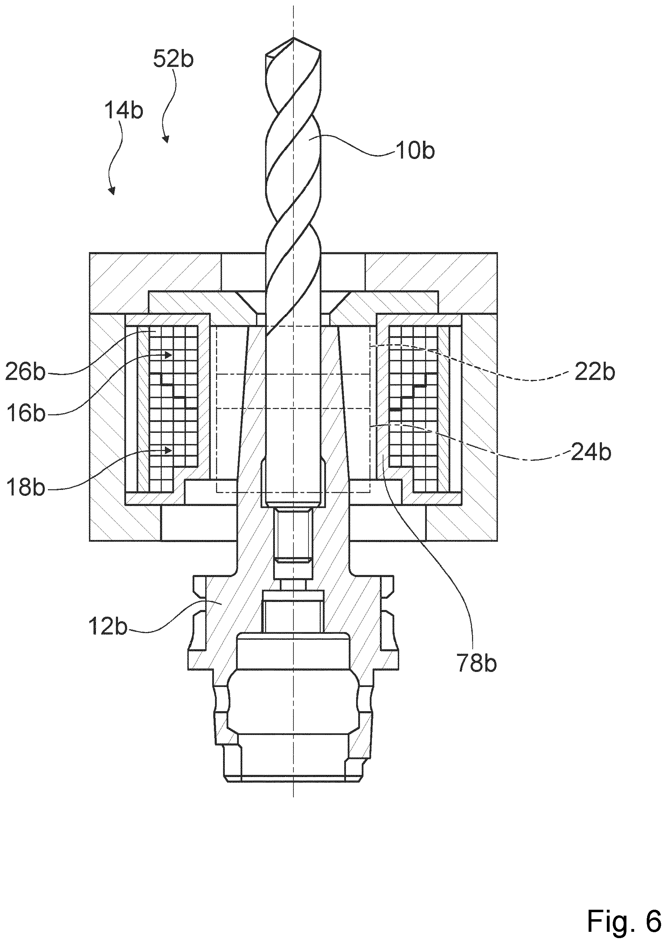

In den Figuren 6 bis 12 sind sieben weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 5b, verwiesen werden kann. Zur Unterscheidung der Ausführungsbeispiele ist der Buchstabe a den Bezugszeichen des Ausführungsbeispiels in den Figuren 1 bis 5b nachgestellt. In den Ausführungsbeispielen der Figuren 6 bis 12 ist der Buchstabe a durch die Buchstaben b bis h ersetzt.

Die Fig. 6 zeigt eine alternative Induktionsheizvorrichtung 52b mit einer alternativen Induktionsheizeinheit 14b, welche alternative Induktoren 16b, 18b aufweist. Die Induktoren 16b, 18b weisen einen gemeinsamen Wickelkörper 78b auf. Die Induktoren 16b, 18b sind eng aneinander anliegend in der Induktionsheizeinheit 14b angeordnet. Der erste Induktor 16b und der zweite Induktor 18b sind zueinander teilweise überlappend gewickelt. Der erste Induktor 16b und der zweite Induktor 18b sind zueinander teilweise überlappend auf den gemeinsamen Wickelkörper 78b aufgewickelt. Der erste Induktor 16b ist abschnittsweise konisch gewickelt. Der zweite Induktor 18b ist abschnittsweise konisch gewickelt.

Die Fig. 7 zeigt eine zweite alternative Induktionsheizvorrichtung 52c mit einer zweiten alternativen Induktionsheizeinheit 14c, welche zwei zweite alternative Induktoren 16c, 18c aufweist. Die Induktoren 16c, 18c weisen getrennte Wickelkörper 124c, 126c auf. Die Induktoren 16c, 18c sind zueinander berührungsfrei. Die Induktoren 16c, 18c sind voneinander beabstandet. Ein Abstand 128c der Induktoren 16c, 18c voneinander beträgt weniger als ein Fünftel der Axialerstreckung des kürzeren der Induktoren 16c, 18c. Der Abstand 128c der Induktoren 16c, 18c voneinander beträgt weniger als 5 mm.

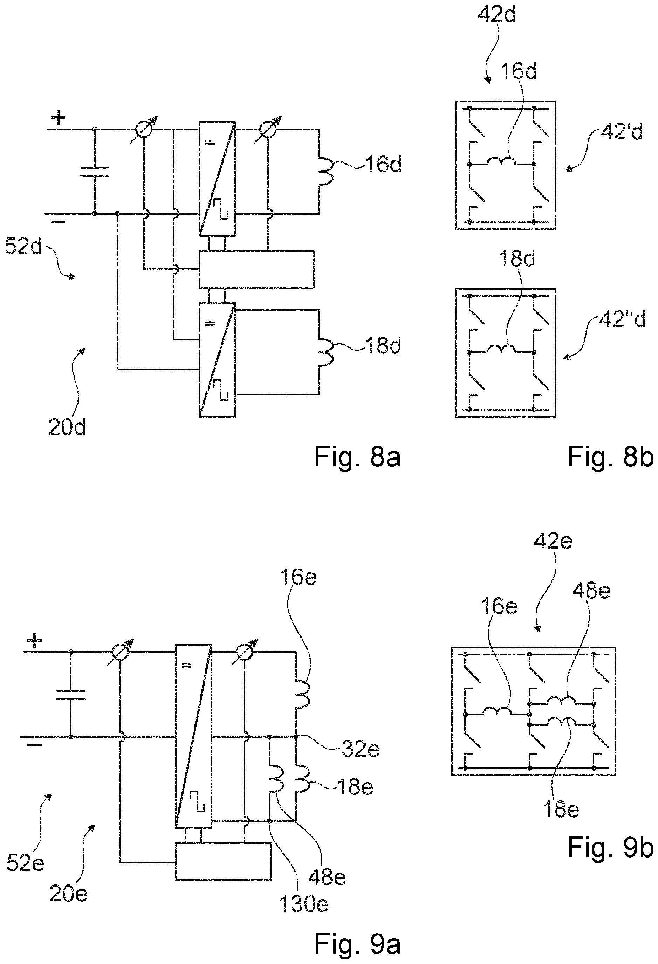

Die Figuren 8a und 8b zeigen schematische elektrische Schaltpläne einer elektrischen Versorgereinheit 20d einer dritten alternativen Induktionsheizvorrichtung 52d, welche eine dritte alternative Induktionsheizeinheit 14d, mit zwei dritten alternativen Induktoren 16d, 18d aufweist. Der erste Induktor 16d und der zweite Induktor 18d sind elektrisch parallelgeschaltet. Der erste Induktor 16d und der zweite Induktor 18d sind frei von gemeinsamen elektrischen Punkten. Die Induktoren 16d, 18d sind elektrisch voneinander getrennt. Die elektrische Versorgereinheit 20d umfasst eine H-Brückenschaltung 42d. Die elektrische Versorgereinheit 20d umfasst eine kombinierte H-Brückenschaltung 42d mit zwei parallel geschalteten, und insbesondere synchronisierten, Stromquellen mit je einer H-Brücke 42'd, 42"d (vgl. Fig. 8b). Die erste H-Brücke 42'd ist zu einer Versorgung des ersten Induktors 16d mit Wechselstrom vorgesehen. Die zweite H-Brücke 42"d ist zu einer Versorgung des zweiten Induktors 18d mit Wechselstrom vorgesehen. Die Stromzufuhr durch die beiden H-Brücken 42'd, 42"d ist unabhängig voneinander schaltbar. Insbesondere kann bei der Schaltung nach den Figuren 8a und 8b die Pulsbreite der Wechselströme der beiden Induktoren 16d, 18d unterschiedlich sein, wobei jedoch in jedem Fall weiterhin eine Phasengleichheit und eine Frequenzgleichheit der Wechselströme der beiden Induktoren 16d, 18d besteht.

Die Figuren 9a und 9b zeigen schematische elektrische Schaltpläne einer elektrischen Versorgereinheit 20e einer vierten alternativen Induktionsheizvorrichtung 52e, welche eine vierte alternative Induktionsheizeinheit 14e aufweist. Die Induktionsheizeinheit 14e umfasst einen ersten Induktor 16e und einen zweiten Induktor 18e. Die Induktionsheizeinheit 14e umfasst einen dritten Induktor 48e. Der dritte Induktor 48e ist mittels der elektrischen Versorgereinheit 20e betreibbar. Der dritte Induktor 48e ist elektrisch parallel zu dem ersten Induktor 16e zuschaltbar. Der dritte Induktor 48e ist elektrisch parallel zu dem zweiten Induktor 18e geschaltet. Der dritte Induktor 48e weist eine größere Induktivität auf als der erste Induktor 16e. Der dritte Induktor 48e weist eine größere Induktivität auf als der zweite Induktor 18e. Der dritte Induktor 48e weist einen gemeinsamen elektrischen Punkt 32e mit dem ersten Induktor 16e auf. Der dritte Induktor 48e weist einen weiteren gemeinsamen elektrischen Punkt 130e mit dem zweiten Induktor 18e auf. Alternativ kann der dritte Induktor 48e auch analog zu den Figuren 8a und 8b durch einen separaten Ausgang mit einer separaten H-Brücke versorgt werden oder als Verbindungsinduktivität zwischen die beiden H-Brücken 42'd, 42"d der Figuren 8a und 8b geschaltet sein. Dabei können insbesondere ebenfalls die Pulsbreiten der Wechselströme der Induktoren 16e, 18e, 48e unterschiedlich sein, wobei jedoch in jedem Fall weiterhin eine Phasengleichheit und eine Frequenzgleichheit der Wechselströme der Induktoren 16e, 18e, 48e bestehen bleibt. Bei einer unterschiedlichen Pulsbreite der Induktoren 16e, 18e, 48e könnte die Bedingung L2 > L1 entfallen.

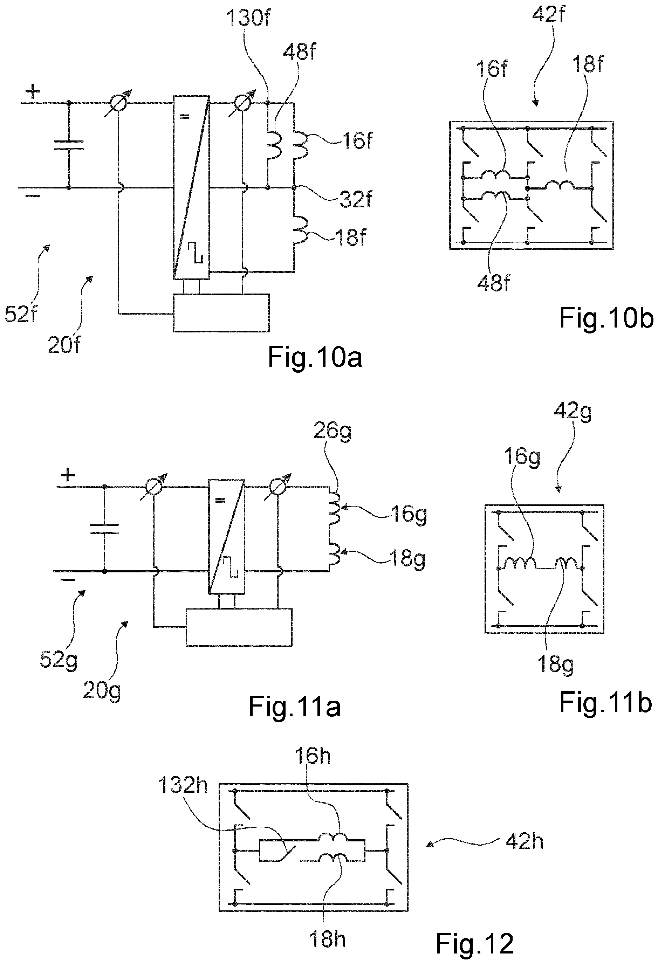

Die Figuren 10a und 10b zeigen schematische elektrische Schaltpläne einer elektrischen Versorgereinheit 20f einer fünften alternativen Induktionsheizvorrichtung 52f, welche eine fünfte alternative Induktionsheizeinheit 14f mit drei fünften alternativen Induktoren 16f, 18f, 48f aufweist. Die Induktionsheizeinheit 14f ist analog zu der Induktionsheizeinheit 14e der Figuren 9a und 9b aufgebaut mit dem Unterschied, dass der dritte Induktor 48f elektrisch parallel zu dem zweiten Induktor 18f zuschaltbar ist. Zugleich ist abweichend von der Induktionsheizeinheit 14e der Figuren 9a und 9b der dritte Induktor 48f elektrisch parallel zu dem ersten Induktor 16f geschaltet.

Die Figuren 11a und 11b zeigen schematische elektrische Schaltpläne einer elektrischen Versorgereinheit 20g einer sechsten alternativen Induktionsheizvorrichtung 52g, welche eine sechste alternative Induktionsheizeinheit 14g mit zwei sechsten alternativen Induktoren 16g, 18g aufweist. Die Induktoren 16g, 18g weisen jeweils Windungen 26g auf. Die beiden Induktoren 16g, 18g sind elektrisch in Reihe geschaltet. Die Induktoren 16g, 18g sind dazu vorgesehen, jeweils unterschiedliche Energien an unterschiedliche Teilbereiche 22g, 24g einer Werkzeugaufnahme 12g, welche in einem Erwärmungsbetrieb jeweils von den Induktoren 16g, 18g umgeben sind, abzugeben. Dazu weist einer der Induktoren 16g, 18g mehr Windungen 26g auf als der andere Induktor 16g, 18g. Der in einem Erwärmungsbetrieb weiter von einer Werkzeugaufnahmeöffnung 36g der Werkzeugaufnahme 12g entfernte Induktor 16g, 18g der beiden Induktoren 16g, 18g weist die kleinere Anzahl an Windungen 26g auf. Der erste Induktor 16g weist zumindest 10 %, mehr Windungen 26g auf als der zweite Induktor 18g. Vorteilhaft kann durch die unterschiedlichen Windungszahlen der beiden Induktoren 16, 18g ein gewünschtes Verhältnis von Induktivitäten L1/L2 der beiden Induktoren 16g, 18g erreicht und/oder eingestellt werden. Die beiden Induktoren 16g, 18g sind nicht unterschiedlich betreibbar. Die beiden Induktoren 16g, 18g sind nicht zeitlich unterschiedlich betreibbar. Die elektrische Versorgereinheit 20g umfasst eine H-Brückenschaltung 42g mit einer einzelnen H-Brücke, welche beide Induktoren 16g, 18g mit Wechselstrom versorgt. Der erste Induktor 16g und der zweite Induktor 18g weisen unterschiedliche Induktivitäten auf. Der in dem Erwärmungsbetrieb in Axialrichtung 34g der Induktionsheizeinheit 14g näher an der Werkzeugaufnahmeöffnung 36g der Werkzeugaufnahme 12g angeordnete erste Induktor 16g weist eine Induktivität auf, welche zumindest um 3 %, vorzugsweise um zumindest 10 % und bevorzugt um zumindest 20 % größer ist als die Induktivität des in dem Erwärmungsbetrieb in Axialrichtung 34g der Induktionsheizeinheit 14g weiter von der Werkzeugaufnahmeöffnung 36g entfernt angeordneten zweiten Induktors 18g.

Die Figur 12 zeigt einen schematischen elektrischen Schaltplan einer elektrischen Versorgereinheit 20h einer siebten alternativen Induktionsheizvorrichtung 52h, welche eine siebte alternative Induktionsheizeinheit 14h mit zwei siebten alternativen Induktoren 16h, 18h aufweist. Die beiden Induktoren 16h, 18h sind zueinander parallel geschaltet. Die elektrische Versorgereinheit 20h umfasst eine H-Brückenschaltung 42h mit einer einzelnen H-Brücke, welche dazu vorgesehen ist beide parallel geschalteten Induktoren 16h, 18h mit Wechselstrom zu versorgen. Die elektrische Versorgereinheit 20h umfasst einen Schalter 132h, welcher dazu vorgesehen ist, die Wechselstromversorgung des zweiten Induktors 18h zu unterbrechen, insbesondere während der erste Induktor 16h weiterhin von der elektrischen Versorgereinheit 20h mit Wechselstrom versorgt wird. Der Schalter 132h kann als ein Relais, als ein Schütz oder als ein Halbleiter ausgebildet sein. Der Schalter 132h kann mittels einer Steuer- und/oder Regeleinheit 70h der elektrischen Versorgereinheit 20h steuerbar sein. Insbesondere ist auch bei der Lösung aus den Figuren 3a und 3b denkbar, dass ein vergleichbarer Schalter die Wechselstromversorgung des zweiten Induktors 18a auf vergleichbare Weise steuert.

### Bezugszeichen

- 10: Werkzeug
- 12: Werkzeugaufnahme
- 14: Induktionsheizeinheit
- 16: Erster Induktor
- 18: Zweiter Induktor
- 20: Elektrische Versorgereinheit
- 22: Teilbereich
- 24: Teilbereich
- 26: Windung
- 28: Aufnahmebereich
- 30: Materialstärke
- 32: Gemeinsamer elektrischer Punkt
- 34: Axialrichtung
- 36: Werkzeugaufnahmeöffnung
- 38: Gesamte Wickelhöhe
- 40: Normierte Einspannlänge
- 42: H-Brückenschaltung
- 44: Wechselstromausgang
- 46: Wechselstromausgang
- 48: Dritter Induktor
- 50: Kit
- 52: Induktionsheizvorrichtung
- 54: Ein- und/oder Ausschrumpfspannstation
- 56: Basisgestell
- 58: Haltevorrichtung
- 60: Längeneinstellpin
- 62: Werkzeugschaft
- 64: Rotationsachse
- 66: Turm
- 68: Lagerschiene
- 70: Steuer- und/oder Regeleinheit
- 72: Arbeitsbereich
- 74: Spulenachse
- 76: Energiemesseinheit
- 78: Gemeinsamer Wickelkörper
- 80: Gehäuseeinheit
- 82: Gehäusedeckel
- 84: Gehäuseschale
- 86: Ferritisches Element
- 88: Anschlag
- 90: Ausgabeschnittstelle
- 92: Eingabeschnittstelle
- 94: Kommunikationsschnittstelle
- 96: Energiequelle
- 98: Ordinate
- 100: Abszisse
- 102: Verfahrensschritt
- 104: Verfahrensschritt
- 106: Teilverfahrensschritt
- 108: Teilverfahrensschritt
- 110: Unterschritt
- 112: Unterschritt
- 114: Teilverfahrensschritt
- 116: Teilverfahrensschritt
- 118: Verfahrensschritt
- 120: Verfahrensschritt
- 122: Verfahrensschritt
- 124: Wickelkörper
- 126: Wickelkörper
- 128: Abstand
- 130: Gemeinsamer elektrischer Punkt
- 132: Schalter

## Patentansprüche

1. Induktionsheizvorrichtung (52a-h) für ein Ein- und/oder Ausschrumpfen von Werkzeugen (10a-h) in und/oder aus Werkzeugaufnahmen (12a-h) mit einer Induktionsheizeinheit (14a-h), welche zumindest einen ersten Induktor (16a-h) und zumindest einen, vorzugsweise von dem ersten Induktor (16a-h) getrennt ausgebildeten, zweiten Induktor (18a-h) umfasst, wobei der erste Induktor (16a-h) und der zweite Induktor (18a-h) dazu vorgesehen sind, jeweils zumindest einen, insbesondere unterschiedlichen, Teil der Werkzeugaufnahme (12a-h) bei einem Ein- und/oder Ausschrumpfvorgang durch ein induktives Erhitzen aufzuweiten, und mit einer elektrischen Versorgereinheit (20a-h), **dadurch gekennzeichnet, dass** die Induktoren (16a-h, 18a-h) dazu vorgesehen sind, jeweils unterschiedliche Energien an unterschiedliche Teilbereiche (22a-h, 24a-h) einer Werkzeugaufnahme (12a-h), welche in einem Erwärmungsbetrieb jeweils von den Induktoren (16a-h, 18a-h) umgeben sind, abzugeben, indem einer der Induktoren (16a-h, 18a-h) mehr Windungen (26a-h) aufweist als der andere Induktor (16a-h, 18a-h), insbesondere zumindest 10 %, vorzugweise zumindest 20 % und bevorzugt zumindest 30 % mehr Windungen (26a-h), und/oder indem die elektrische Versorgereinheit (20a-f; 20h) zumindest dazu vorgesehen ist, den ersten Induktor (16a-f; 16h) und den zweiten Induktor (18a-f; 18h) unterschiedlich zu betreiben, wobei der erste Induktor (16a-b; 16d-h) und der zweite Induktor (18a-b; 18d-h) eng aneinander anliegend in der Induktionsheizeinheit (14a-b; 14d-h) angeordnet sind und wobei eine gesamte Wickelhöhe (38a-h) der Induktoren (16a-h, 18a-h) in einer Axialrichtung (34a-h) der Induktionsheizeinheit (14a-h) kleiner ist als eine maximale normierte Einspannlänge (40a-h) der Werkzeugaufnahmen (12a-h).

2. Induktionsheizvorrichtung (52a-f; 52h) nach Anspruch 1, **dadurch gekennzeichnet, dass** die elektrische Versorgereinheit (20a-f; 20h) dazu vorgesehen ist, die beiden Induktoren (16a-f, 18a-f; 16h, 18h) derart unterschiedlich zu betreiben, dass ein Energieeintrag in einen um einen Aufnahmebereich (28a-f; 28h) einer Werkzeugaufnahme (12a-f; 12h) angeordneten ersten Teilbereich (22a-f; 22h) der Werkzeugaufnahme (12a-f; 12h), welcher in einem Erwärmungsbetrieb von einem der Induktoren (16a-f, 18a-f; 16h, 18h) umgeben ist, zu einem Energieeintrag in einen ebenfalls um den Aufnahmebereich (28a-f; 28h) der Werkzeugaufnahme (12a-f; 12h) angeordneten zweiten Teilbereich (24a-f; 24h) der Werkzeugaufnahme (12a-f; 12h), welcher in dem Erwärmungsbetrieb von dem anderen der Induktoren (16a-f, 18a-f; 16h, 18h) umgeben ist, ausbalanciert ist, so dass eine Radialdehnung des gesamten Aufnahmebereichs (28a-f; 28h) der Werkzeugaufnahme (12a-f; 12h) in dem Erwärmungsbetrieb in beiden Teilbereichen (22a-f, 24a-f; 22h, 24h) zumindest im Wesentlichen gleich ist, wobei insbesondere der erste Teilbereich (22a-f; 22h) eine geringere Materialstärke (30a-f; 30h) aufweist als der zweite Teilbereich (24a-f; 24h).

3. Induktionsheizvorrichtung (52a-h) nach Anspruch 1 oder 2, **dadurch gekennzeichnet, dass** die elektrische Versorgereinheit (20a-h) dazu vorgesehen ist, den ersten Induktor (16a-h) und den zweiten Induktor (18a-h) in Phase zu betreiben.

4. Induktionsheizvorrichtung (52a-h) nach einem der vorhergehenden Ansprüche, **dadurch gekennzeichnet, dass** der erste Induktor (16a-h) und der zweite Induktor (18a-h) in einem Erwärmungsbetrieb richtungsgleiche Magnetfelder erzeugen.

5. Induktionsheizvorrichtung (52a-f; 52h) nach einem der vorhergehenden Ansprüche, **dadurch gekennzeichnet, dass** der erste Induktor (16a-f; 16h) und der zweite Induktor (18a-f; 18h) elektrisch parallelgeschaltet sind.

6. Induktionsheizvorrichtung (52a-c; 52e-f) nach Anspruch 5, **dadurch gekennzeichnet, dass** der erste Induktor (16a-c; 16e-f) und der zweite Induktor (18a-c; 18e-f) einen gemeinsamen elektrischen Punkt (32a-c; 32e-f) besitzen.

7. Induktionsheizvorrichtung (52a-h) nach einem der vorhergehenden Ansprüche, **dadurch gekennzeichnet, dass** der erste Induktor (16a-h) und der zweite Induktor (18a-h) unterschiedliche Induktivitäten aufweisen.

8. Induktionsheizvorrichtung (52a-h) nach Anspruch 7, **dadurch gekennzeichnet, dass** der in einem Erwärmungsbetrieb in Axialrichtung (34a-h) der Induktionsheizeinheit (14a-h) näher an einer Werkzeugaufnahmeöffnung (36a-h) der Werkzeugaufnahme (12a-h) angeordnete erste Induktor (16a-h) eine Induktivität aufweist, welche zumindest um 3 % größer oder kleiner ist als eine Induktivität des in dem Erwärmungsbetrieb in Axialrichtung (34a-h) der Induktionsheizeinheit (14a-h) weiter von der Werkzeugaufnahmeöffnung (36a-h) entfernt angeordneten zweiten Induktors (18a-h).

9. Induktionsheizvorrichtung (52a-f; 52h) nach einem der vorhergehenden Ansprüche, **dadurch gekennzeichnet, dass** die elektrische Versorgereinheit (20a-f; 20h) dazu vorgesehen ist, zumindest einen der Induktoren (16a-f, 18a-f; 16h, 18h) paketweise und/oder gepulst zu betreiben.

10. Induktionsheizvorrichtung (52a-f; 52h) nach einem der vorhergehenden Ansprüche, **dadurch gekennzeichnet, dass** die elektrische Versorgereinheit (20a-f; 20h) dazu vorgesehen ist, eine an die Werkzeugaufnahme (12a-f; 12h) übertragene Gesamtenergiemenge, insbesondere abschnittsweise, zu steuern und/oder zu regeln.

11. Induktionsheizvorrichtung (52g) zumindest nach einem der Ansprüche 1 bis 4, **dadurch gekennzeichnet, dass** die beiden Induktoren (16g, 18g), welche unterschiedliche Anzahlen an Windungen (26g) aufweisen, elektrisch in Reihe geschaltet sind.

12. Induktionsheizvorrichtung (52g) nach Anspruch 11, **dadurch gekennzeichnet, dass** der in einem Erwärmungsbetrieb weiter von einer Werkzeugaufnahmeöffnung (36g) der Werkzeugaufnahme (12g) entfernte Induktor (16g, 18g) der beiden Induktoren (16g, 18g) die kleinere Anzahl an Windungen (26g) aufweist.

13. Induktionsheizvorrichtung (52a-h) nach einem der vorhergehenden Ansprüche, **dadurch gekennzeichnet, dass** die elektrische Versorgereinheit (20a-h) dazu vorgesehen ist, den ersten Induktor (16a-h) und den zweiten Induktor (18a-h) mit einer Frequenz zwischen 5 kHz und 70 kHz zu betreiben.

14. Induktionsheizvorrichtung (52a-h) nach einem der vorhergehenden Ansprüche, **dadurch gekennzeichnet, dass** die elektrische Versorgereinheit (20a-h) dazu vorgesehen ist, bei einem Abschalten von zumindest einem der beiden Induktoren (16a-h, 18a-h) eine Stromzufuhr an den Induktor (16a-h, 18a-h) derart zu steuern, dass eine wesentliche Entmagnetisierung des Werkzeugs (1 0a-h) und/oder der Werkzeugaufnahme (12a-h) erfolgt.

15. Induktionsheizvorrichtung (52a-h) nach einem der vorhergehenden Ansprüche, **dadurch gekennzeichnet, dass** die Induktionsheizeinheit (14a-h) frei ist von zwischen dem ersten Induktor (16a-h) und dem zweiten Induktor (18a-h) angeordneten Feldformerelementen.

16. Induktionsheizvorrichtung (52b; 52d-h) nach einem der vorhergehenden Ansprüche, **dadurch gekennzeichnet, dass** der erste Induktor (16b; 16d-h) und der zweite Induktor (18b; 18d-h) zueinander überlappungsfrei gewickelt sind.

17. Induktionsheizvorrichtung (52a; 52c-h) nach einem der Ansprüche 1 bis 15, **dadurch gekennzeichnet, dass** der erste Induktor (16a; 16c-h) und der zweite Induktor (18a; 18c-h) zueinander teilweise überlappend gewickelt sind.

18. Induktionsheizvorrichtung (52a-h) nach einem der vorhergehenden Ansprüche, **dadurch gekennzeichnet, dass** zumindest der erste Induktor (16b) und/oder der zweite Induktor (18a-h) konisch und/oder gestuft gewickelt ist.

19. Induktionsheizvorrichtung (52a-h) nach einem der vorhergehenden Ansprüche, **dadurch gekennzeichnet, dass** die elektrische Versorgereinheit (20a-h) eine, insbesondere modifizierte, H-Brückenschaltung (42a-h), insbesondere mit zumindest zwei Wechselstromausgängen (44a-f, 46a-f), umfasst.

20. Induktionsheizvorrichtung (52e-f) nach einem der vorhergehenden Ansprüche, **dadurch gekennzeichnet, dass** die Induktionsheizeinheit (14e-f) zumindest einen dritten Induktor (48e-f) umfasst, welcher mittels der elektrischen Versorgereinheit (20e-f) betreibbar ist.

21. Induktionsheizvorrichtung (52e-f) nach Anspruch 20, **dadurch gekennzeichnet, dass** der dritte Induktor (48e-f) elektrisch parallel zu dem ersten Induktor (16e-f) und/oder dem zweiten Induktor (18e-f) zuschaltbar ist.

22. Induktionsheizvorrichtung (52e-f) nach Anspruch 20 oder 21, **dadurch gekennzeichnet, dass** der dritte Induktor (48e-f) eine größere Induktivität aufweist als der erste Induktor (16e-f) und/oder als der zweite Induktor (18e-f).

23. Induktionsheizvorrichtung (52a-h) nach einem der vorhergehenden Ansprüche, **dadurch gekennzeichnet, dass** zumindest einer der Induktoren (16a-h, 18a-h) zerstörungsfrei aus der Induktionsheizeinheit (14a-h) entnehmbar und/oder austauschbar ist.

24. Kit (50a-h) mit einer Induktionsheizeinheit (14a-h) einer Induktionsheizvorrichtung (52a-h) nach einem der Ansprüche 1 bis 23 und mit einer Mehrzahl unterschiedlich dimensionierter Induktoren (16a-h, 16'a-h, 16"a-h, 16"`a-h, 16""a-h, 18a-h, 18'a-h, 18"a-h, 18"`a-h, 18""a-h, 48a-h), welche in verschiedenen Weisen in der Induktionsheizeinheit (14a-h) kombinierbar sind.

25. Ein- und/oder Ausschrumpfspannstation (54a-h) für Werkzeuge (10a-h) mit einer Induktionsheizvorrichtung (52a-h) nach einem der Ansprüche 1 bis 23 und/oder mit einem Kit (50a-h) nach Anspruch 24.

26. Verfahren zum Betrieb einer Induktionsheizvorrichtung (52a-f; 52h) für ein Ein- und/oder Ausschrumpfen von Werkzeugen (10a-f; 10h) in und/oder aus Werkzeugaufnahmen (12a-f; 12h), insbesondere nach einem der Ansprüche 1 bis 10 oder nach einem der Ansprüche 13 bis 23, mit einer Induktionsheizeinheit (14a-f; 14h), welche zumindest einen ersten Induktor (16a-f; 16h) und zumindest einen von dem ersten Induktor (16a-f; 16h) getrennt ausgebildeten zweiten Induktor (18a-f; 18h) umfasst, der erste Induktor (16a-b; 16d-h) und der zweite Induktor (18a-b; 18d-h) eng aneinander anliegend in der Induktionsheizeinheit (14a-b; 14d-h) angeordnet sind, und wobei mittels des ersten Induktors (16a-f; 16h) und mittels des zweiten Induktors (18a-f; 18h) jeweils zumindest ein, insbesondere unterschiedlicher, Teil der Werkzeugaufnahme (12a-f; 12h) bei einem Ein- und/oder Ausschrumpfvorgang durch ein induktives Erhitzen aufgeweitet wird, **dadurch gekennzeichnet, dass** in einem Erwärmungsbetrieb zur Aufweitung einer Werkzeugaufnahme (12a-f; 12h) der erste Induktor (16a-f; 16h) und der zweite Induktor (18a-f; 18h) unterschiedlich betrieben werden, wobei in dem Erwärmungsbetrieb zur Aufweitung der Werkzeugaufnahme (12a-f; 12h) einer der beiden Induktoren (16a-f, 18a-f; 16h, 18h) insgesamt länger bestromt wird als der andere Induktor (16a-f, 18a-f; 16h, 18h).

27. Verfahren nach Anspruch 26, **dadurch gekennzeichnet, dass** der Erwärmungsbetrieb zumindest eines der Induktoren (16a-f, 18a-f; 16h, 18h) nach Erreichen einer vorgegebenen von dem Induktor (16a-f, 18a-f; 16h, 18h) an die Werkzeugaufnahme (12a-f; 12h) übertragenen Energie oder nach Erreichen eines vorgegebenen Anteils an einer vorgegebenen Gesamtenergie aller Induktoren (16a-f, 18a-f; 16h, 18h) automatisch beendet wird.

## Claims

1. Induction heating device (52a-h) for a shrink-clamping and/or unshrink-unclamping of tools (10a-h) into and/or out of tool holders (12a-h),
with an induction heating unit (14a-h) comprising at least one first inductor (16a-h) and at least one second inductor (18a-h) which is preferably realized separately from the first inductor (16a-h),
wherein the first inductor (16a-h) and the second inductor (18a-h) are configured to respectively expand at least a portion, in particular different portions, of the tool holder (12a-h) by inductive heating in a shrink-clamping and/or unshrink-unclamping process,
and with an electric supply unit (20a-h),
**characterized in that** the inductors (16a-h, 18a-h) are configured to output respectively different energies to different subregions (22a-h, 24ah) of a tool holder (12a-h), which are in a heating operation respectively encompassed by the inductors (16a-h, 18a-h),
as one of the inductors (16a-h, 18a-h) has more windings (26a-h) than the other inductor (16a-h, 18a-h), in particular by at least 10 %, preferably by at least 20 % and preferentially by at least 30 % more windings (26a-h), and/or as the electric supply unit (20a-f; 20h) is at least configured to operate the first inductor (16a-f; 16h) and the second inductor (18a-f; 18h) in different manners,
wherein the first inductor (16a-b; 16d-h) and the second inductor (18a-b; 18d-h) are arranged in the induction heating unit (14a-b; 14d-h) such that they are closely adjacent to each other
and wherein a total winding height (38a-h) of the two inductors (16a-h, 18a-h) in an axial direction (34a-h) of the induction heating unit (14a-h) is smaller than a maximum standardized clamp-in length (40a-h) of the tool holders (12a-h).

2. Induction heating device (52a-f; 52h) according to claim 1,
**characterized in that** the electric supply unit (20a-f; 20h) is configured to operate the two inductors (16a-f, 18a-f; 16h, 18h) differently in such a way that an energy input into a first subregion (22a-f; 22h) of a tool holder (12a-f; 12h), which is arranged around a receiving region (28a-f; 28h) of the tool holder (12a-f; 12h) and is in a heating operation encompassed by one of the inductors (16a-f, 18a-f; 16h, 18h), is balanced with an energy input into a second subregion (24a-f; 24h) of the tool holder (12a-f; 12h), which is also arranged around the receiving region (28a-f; 28h) of the tool holder (12a-f; 12h) and is in the heating operation encompassed by the other one of the inductors (16a-f, 18a-f; 16h, 18h),
as a result of which in the heating operation a radial expansion of the entire receiving region (28a-f; 28h) of the tool holder (12a-f; 12h) is at least substantially identical in both subregions (22a-f, 24a-f; 22h, 24h),
wherein in particular the first subregion (22a-f; 22h) has a smaller material thickness (30a-f; 30h) than the second subregion (24a-f; 24h).

3. Induction heating device (52a-h) according to claim 1 or 2,
**characterized in that** the electric supply unit (20a-h) is configured to operate the first inductor (16a-h) and the second inductor (18a-h) in phase.

4. Induction heating device (52a-h) according to one of the preceding claims, **characterized in that** in a heating operation the first inductor (16a-h) and the second inductor (18a-h) create magnetic fields having the same direction.

5. Induction heating device (52a-f; 52h) according to one of the preceding claims,
**characterized in that** the first inductor (16a-f; h) and the second inductor (18a-f; 18h) are electrically connected in parallel.

6. Induction heating device (52a-c; 52e-f) according to claim 5,
**characterized in that** the first inductor (16a-c; 16e-f) and the second inductor (18a-c; 18e-f) have a common electric point (32a-c, 32e-f).

7. Induction heating device (52a-h) according to one of the preceding claims, **characterized in that** the first inductor (16a-h) and the second inductor (18a-h) have differing inductivities.

8. Induction heating device (52a-h) according to claim 7,
**characterized in that** the first inductor (16a-h), which is in the heating operation arranged nearer to a tool receiving opening (36a-h) of the tool holder (12a-h) in an axial direction (34a-h) of the induction heating unit (14a-h), has an inductivity that is by at least 3 % greater or smaller than an inductivity of the second inductor (18a-h), which is in the heating operation arranged farther away from the tool receiving opening (36a-h) in the axial direction (34a-h) of the induction heating unit (14a-h).

9. Induction heating device (52a-f; 52h) according to one of the preceding claims,
**characterized in that** the electric supply unit (20a-f; 20h) is configured for operating at least one of the inductors (16a-f, 18a-f; 16h, 18h) in a package-wise or pulsed manner.

10. Induction heating device (52a-f; 52h) according to one of the preceding claims,
**characterized in that** the electric supply unit (20a-f; 20h) is configured for an, in particular section-wise, controlling and/or regulation of a total energy quantity transferred to the tool holder (12a-f; 12h).

11. Induction heating device (52g) at least according to one of claims 1 to 4, **characterized in that** the two inductors (16g, 18g) having different numbers of windings (26g) are electrically connected in series.

12. Induction heating device (52g) according to claim 11,
**characterized in that** of the two inductors (16g, 18g), the inductor (16g, 18g) that is in a heating operation farther away from a tool receiving opening (36g) of the tool holder (12g) has the smaller number of windings (26g).

13. Induction heating device (52a-h) according to one of the preceding claims, **characterized in that** the electric supply unit (20a-h) is configured to operate the first inductor (16a-h) and the second inductor (18a-h) with a frequency between 5 kHz and 70 kHz.

14. Induction heating device (52a-h) according to one of the preceding claims, **characterized in that** the electric supply unit (20a-h) is configured, in case of at least one of the two inductors (16a-h, 18a-h) being switched off, to control a current feed to the inductor (16a-h, 18a-h) in such a way that an essential demagnetization of the tool (10a-h) and/or the tool holder (12a-h) is brought about.

15. Induction heating device (52a-b; 52d-h) according to one of the preceding claims,
**characterized in that** the induction heating unit (14a-h) is free of field shaping elements arranged between the first inductor (16a-h) and the second inductor (18a-h).

16. Induction heating device (52b; 52d-h) according to one of the preceding claims,
**characterized in that** the first inductor (16b; 16d-h) und the second inductor (18b; 18d-h) are wound such that they are free of overlap with each other.

17. Induction heating device (52a; 52c-h) according to one of claims 1 to 15, **characterized in that** the first inductor (16a; 16c-h) and the second inductor (18a; 18c-h) are wound such that they partially overlap.

18. Induction heating device (52a-h) according to one of the preceding claims, **characterized in that** at least the first inductor (16b) and/or the second inductor (18a-h) are/is wound conically and/or stepped.

19. Induction heating device (52a-h) according to one of the preceding claims, **characterized in that** the electric supply unit (20a-h) comprises an, in particular modified, H-bridge circuit (42a-h), in particular with at least two alternating current outputs (44a-f, 46a-f).

20. Induction heating device (52e-f) according to one of the preceding claims, **characterized in that** the induction heating unit (14e-f) comprises at least one third inductor (48e-f), which is operable via the electric supply unit (20e-f).

21. Induction heating device (52e-f) according to claim 20,
**characterized in that** the third inductor (48e-f) can be additionally connected electrically in parallel to the first inductor (16e-f) and/or to the second inductor (18e-f).

22. Induction heating device (52e-f) according to claim 20 or 21,
**characterized in that** the third inductor (48e-f) has a greater inductivity than the first inductor (16e-f) and/or than the second inductor (18e-f).

23. Induction heating device (52a-h) according to one of the preceding claims, **characterized in that** at least one of the inductors (16a-h, 18a-h) is removable out of the induction heating unit (14a-h) and/or exchangeable without destruction.

24. Kit (50a-h) with an induction heating unit (14a-h) of an induction heating device (52a-h) according to one of claims 1 to 23,
and with a plurality of differently dimensioned inductors (16a-h, 16'a-h, 16"a-h, 16‴a-h, 16ʺʺa-h, 18a-h, 18'a-h, 18"a-h, 18‴a-h, 18ʺʺa-h, 48a-h), which can be combined in the induction heating unit (14a-h) in different ways.

25. Shrink-clamping and/or unshrink-unclamping station (54a-h) for tools (10ah), with an induction heating device (52a-h) according to one of claims 1 to 23 and/or with a kit (50a-h) according to claim 24.

26. Method for operating an induction heating device (52a-f; 52h) for a shrink-clamping and/or unshrink-unclamping of tools (10a-f; 10h) into and/or out of tool holders (12a-f; 12h), in particular according to one of claims 1 to 10 or according to one of claims 13 to 23, with an induction heating unit (14a-f; 14h) comprising at least one first inductor (16a-f; 16h) and at least one second inductor (18a-f; 18h) which is realized separately from the first inductor (16a-f; 16h),
wherein the first inductor (16a-b; 16d-h) and the second inductor (18a-b; 18d-h) are arranged in the induction heating unit (14a-b; 14d-h) such that they are closely adjacent to each other,
and wherein by means of the first inductor (16a-f; 16h) and by means of the second inductor (18a-f; 18h) respectively at least one portion, in particular different portions, of the tool holder (12a-f; 12h) is/are expanded by inductive heating in a shrink-clamping and/or unshrink-unclamping process,
**characterized in that** in a heating operation for expanding a tool holder (12a-f; 12h), the first inductor (16a-f; 16h) and the second inductor (18a-f; 18h) are operated in different manners,
wherein in the heating operation for an expansion of the tool holder (12a-f; 12h), one of the two inductors (16a-f, 18a-f; 16h, 18h) is overall supplied with a current longer than the other inductor (16a-f, 18a-f; 16h, 18h).

27. Method according to claim 26,
**characterized in that** the heating operation of at least one of the inductors (16a-f, 18a-f; 16h, 18h) is automatically terminated after reaching a predetermined energy transferred from the inductor (16a-f, 18a-f; 16h, 18h) to the tool holder (12a-f; 12h) or after reaching a predetermined percentage of a given total energy of all inductors (16a-f, 18a-f; 16h, 18h).

## Revendications

1. Dispositif de chauffage par induction (52a-h) pour un retrait d'outils (10a-h) dedans et/ou dehors de logements d'outil (12a-h),
avec une unité de chauffage par induction (14a-h) qui comprend au moins un premier inducteur (16a-h) et au moins un deuxième inducteur (18a-h) réalisé de préférence séparément du premier inducteur (16a-h), le premier inducteur (16a-h) et le deuxième inducteur (18a-h) étant conçus pour élargir respectivement au moins une partie, en particulier différente, du logement d'outil (12a-h) lors d'un procès de retrait dedans et/ou dehors par le biais de chauffage par induction,
et avec une unité d'alimentation électrique (20a-h),
**caractérisé en ce que** les inducteurs (16a-h, 18a-h) sont conçus pour délivrer respectivement différentes énergies à différentes zones partielles (22a-h, 24a-h) d'un logement d'outil (12a-h) chacune desquelles est dans un mode de chauffage entourée par les inducteurs (16a-h, 18a-h),
par le fait que l'un des inducteurs (16a-h, 18a-h) présente plus de spires (26a-h) que l'autre inducteur (16a-h, 18a-h), en particulier au moins 10 %, de préférence au moins 20 % et préférablement au moins 30 % plus de spires (26a-h),
et/ou que l'unité d'alimentation électrique (20a-f ; 20h) est au moins conçue pour faire fonctionner le premier inducteur (16a-f ; 16h) et le deuxième inducteur (18a-f ; 18h) différemment,
le premier inducteur (16a-b ; 16d-h) et le deuxième inducteur (18a-b ; 18d-h) étant disposés dans l'unité de chauffage par induction (14a-b ; 14d-h) en étant étroitement adjacents l'un à l'autre
et une hauteur d'enroulement totale (38a-h) des inducteurs (16a-h, 18a-h) dans une direction axiale (34a-h) de l'unité de chauffage par induction (14a-h) étant inférieure à une longueur de serrage normalisée maximale (40a-h) des logements d'outil (12a-h).

2. Dispositif de chauffage par induction (52a-f ; 52h) selon la revendication 1,
**caractérisé en ce que** l'unité d'alimentation électrique (20a-f ; 20h) est conçue pour faire fonctionner les deux inducteurs (16a-f, 18a-f ; 16h, 18h) différemment de telle manière qu'un apport d'énergie dans une première zone partielle (22a-f ; 22h) d'un logement d'outil (12a-f ; 12h), qui est disposée autour d'une zone-logement (28a-f ; 28h) du logement d'outil (12a-f ; 12h) et qui est dans un mode de chauffage entourée par l'un des inducteurs (16a-f, 18a-f ; 16h, 18h), est équilibré par rapport à un apport d'énergie dans une deuxième région partielle (24a-f ; 24h) du logement d'outil (12a-f ; 12h), qui est disposée également autour de la zone-logement (28a-f ; 28h) du logement d'outil (12a-f ; 12h) et qui est dans le mode de chauffage entourée par l'autre des inducteurs (16a-f, 18a-f ; 16h, 18h), de telle sorte que dans le mode de chauffage une dilatation radiale de l'entière zone-logement (28a-f ; 28h) du logement d'outil (12a-f ; 12h) soit au moins sensiblement identique dans les deux régions partielles (22a-f, 24a-f ; 22h, 24h),
la première région partielle (22a-f ; 22h) en particulier ayant une épaisseur de matériau (30a-f ; 30h) inférieure à celle de la deuxième région partielle (24a-f ; 24h).

3. Dispositif de chauffage par induction (52a-h) selon la revendication 1 ou 2, **caractérisé en ce que** l'unité d'alimentation électrique (20a-h) est conçue pour faire fonctionner le premier inducteur (16a-h) et le deuxième inducteur (18a-h) en phase.

4. Dispositif de chauffage par induction (52a-h) selon l'une des revendications précédentes,
**caractérisé en ce que** dans un mode de chauffage le premier inducteur (16a-h) et le deuxième inducteur (18a-h) génèrent des champs magnétiques de même sens.

5. Dispositif de chauffage par induction (52a-f ; 52h) selon l'une des revendications précédentes,
**caractérisé en ce que** le premier inducteur (16a-f ; 16h) et le deuxième inducteur (18a-f ; 18h) sont branchés électriquement en parallèle.

6. Dispositif de chauffage par induction (52a-c ; 52e-f) selon la revendication 5,
**caractérisé en ce que** le premier inducteur (16a-c ; 16e-f) et le deuxième inducteur (18a-c ; 18e-f) possèdent un point électrique commun (32a-c ; 32e-f).

7. Dispositif de chauffage par induction (52a-h) selon l'une des revendications précédentes,
**caractérisé en ce que** le premier inducteur (16a-h) et le deuxième inducteur (18a-h) ont des inductances différentes.

8. Dispositif de chauffage par induction (52a-h) selon la revendication 7, **caractérisé en ce que** le premier inducteur (16a-h), qui est dans un mode de chauffage disposé dans la direction axiale (34a-h) de l'unité de chauffage par induction (14a-h) plus près d'une ouverture de logement d'outil (36a-h) du logement d'outil (12a-h), présente une inductance qui est supérieure ou inférieure d'au moins 3 % à une inductance du deuxième inducteur (18a-h), qui est dans le mode de chauffage disposé dans la direction axiale (34a-h) de l'unité de chauffage par induction (14a-h) plus loin de l'ouverture de logement d'outil (36a-h).

9. Dispositif de chauffage par induction (52a-f ; 52h) selon l'une des revendications précédentes,
**caractérisé en ce que** l'unité d'alimentation électrique (20a-f ; 20h) est conçue pour faire fonctionner au moins l'un des inducteurs (16a-f, 18a-f ; 16h, 18h) par paquets et/ou par impulsions.

10. Dispositif de chauffage par induction (52a-f ; 52h) selon l'une des revendications précédentes,
**caractérisé en ce que** l'unité d'alimentation électrique (20a-f ; 20h) est conçue pour commander et/ou réguler, en particulier par sections, une quantité totale d'énergie transmise au logement d'outil (12a-f ; 12h).

11. Dispositif de chauffage par induction (52g) au moins selon l'une des revendications 1 à 4,
**caractérisé en ce que** les deux inducteurs (16g, 18g) ayant des nombres différents de spires (26g) sont branchés électriquement en série.

12. Dispositif de chauffage par induction (52g) selon la revendication 11, **caractérisé en ce que** l'inducteur (16g, 18g) des deux inducteurs (16g, 18g) qui est dans un mode de chauffage plus éloigné d'une ouverture de logement d'outil (36g) du logement d'outil (12g) présente le plus petit nombre de spires (26g).

13. Dispositif de chauffage par induction (52a-h) selon l'une des revendications précédentes,
**caractérisé en ce que** l'unité d'alimentation électrique (20a-h) est conçue pour faire fonctionner le premier inducteur (16a-h) et le deuxième inducteur (18a-h) à une fréquence entre 5 kHz et 70 kHz.

14. Dispositif de chauffage par induction (52a-h) selon l'une des revendications précédentes,
**caractérisé en ce que** l'unité d'alimentation électrique (20a-h) est conçue, lors d'une déconnexion d'au moins l'un des deux inducteurs (16a-h, 18ah), pour commander une alimentation en courant à l'inducteur (16a-h, 18ah) de telle manière qu'une démagnétisation substantielle de l'outil (10a-h) et/ou du logement d'outil (12a-h) a lieu.

15. Dispositif de chauffage par induction (52a-h) selon l'une des revendications précédentes,
**caractérisé en ce que** l'unité de chauffage par induction (14a-h) est exempte d'éléments conformateurs de champ disposés entre le premier inducteur (16a-h) et le deuxième inducteur (18a-h).

16. Dispositif de chauffage par induction (52b ; 52d-h) selon l'une des revendications précédentes,
**caractérisé en ce que** le premier inducteur (16b ; 16d-h) et le deuxième inducteur (18b ; 18d-h) sont enroulés sans chevauchement l'un par rapport à l'autre.

17. Dispositif de chauffage par induction (52a ; 52c-h) selon l'une des revendications 1 à 15,
**caractérisé en ce que** le premier inducteur (16a ; 16c-h) et le deuxième inducteur (18a ; 18c-h) sont enroulés partiellement en chevauchement l'un par rapport à l'autre.

18. Dispositif de chauffage par induction (52a-h) selon l'une des revendications précédentes, **caractérisé en ce qu'**au moins le premier inducteur (16b) et/ou le deuxième inducteur (18a-h) est enroulé de manière conique et/ou échelonnée.

19. Dispositif de chauffage par induction (52a-h) selon l'une des revendications précédentes,
**caractérisé en ce que** l'unité d'alimentation électrique (20a-h) comprend un circuit pont en H (42a-h), en particulier modifié, en particulier avec au moins deux sorties de courant alternatif (44a-f, 46a-f).

20. Dispositif de chauffage par induction (52e-f) selon l'une des revendications précédentes,
**caractérisé en ce que** l'unité de chauffage par induction (14e-f) comprend au moins un troisième inducteur (48e-f) qui peut être fonctionné par le biais de l'unité d'alimentation électrique (20e-f).

21. Dispositif de chauffage par induction (52e-f) selon la revendication 20, **caractérisé en ce que** le troisième inducteur (48e-f) peut être branché en plus électriquement en parallèle au premier inducteur (16e-f) et/ou au deuxième inducteur (18e-f).

22. Dispositif de chauffage par induction (52e-f) selon la revendication 20 ou 21,
**caractérisé en ce que** le troisième inducteur (48e-f) présente une plus grande inductance que le premier inducteur (16e-f) et/ou que le deuxième inducteur (18e-f).

23. Dispositif de chauffage par induction (52a-h) selon l'une des revendications précédentes,
**caractérisé en ce qu'**au moins un des inducteurs (16a-h, 18a-h) peut être retiré de l'unité de chauffage par induction (14a-h) et/ou remplacé de manière non destructive.

24. Kit (50a-h) avec une unité de chauffage par induction (14a-h) d'un dispositif de chauffage par induction (52a-h) selon l'une des revendications 1 à 23 et avec une pluralité d'inducteurs différemment dimensionnés (16a-h, 16'a-h, 16"a-h, 16‴a-h, 16ʺʺa-h, 18a-h, 18'a-h, 18"ah, 18"'a-h, 18""a-h, 48a-h) qui peuvent être combinés de différentes manières dans l'unité de chauffage par induction (14a-h).

25. Poste de serrage à retrait dedans et/ou dehors (54a-h) pour outils (10a-h), avec un dispositif de chauffage par induction (52a-h) selon l'une des revendications 1 à 23 et/ou avec un kit (50a-h) selon la revendication 24.

26. Procédé pour faire fonctionner un dispositif de chauffage par induction (52a-f ; 52h) pour un retrait d'outils (10a-f ; 10h) dedans et/ou dehors de logements d'outil (12a-f ; 12h), en particulier selon l'une des revendications 1 à 10 ou selon l'une des revendications 13 à 25,
avec une unité de chauffage par induction (14a-f ; 14h) qui comprend au moins un premier inducteur (16a-f ; 16h) et au moins un deuxième inducteur (18a-f ; 18h) réalisé séparément du premier inducteur (16a-f ; 16h), où le premier inducteur (16a-b ; 16d-h) et le deuxième inducteur (18a-b ; 18d-h) sont disposés dans l'unité de chauffage par induction (14a-b ; 14d-h) en étant étroitement adjacents l'un à l'autre,
et où moyennant le premier inducteur (16a-f ; 16h) et moyennant le deuxième inducteur (18a-f ; 18h), respectivement au moins une partie, en particulier différente, du logement d'outil (12a-f ; 12h) est élargie lors d'un processus de retrait dedans et/ou dehors au moyen de chauffage par induction,
**caractérisé en ce que** dans un mode de chauffage pour élargir un logement d'outil (12a-f ; 12h), le premier inducteur (16a-f ; 16h) et le deuxième inducteur (18a-f ; 18h) sont faits fonctionner différemment, où dans le mode de chauffage pour élargir le logement d'outil (12a-f ; 12h), l'un des deux inducteurs (16a-f, 18a-f ; 16h, 18h) est alimenté en courant en tout plus longtemps que l'autre inducteur (16a-f, 18a-f ; 16h, 18h).

27. Procédé selon la revendication 26,
**caractérisé en ce que** le mode de chauffage d'au moins un des inducteurs (16a-f, 18a-f ; 16h, 18h) est terminé automatiquement après avoir atteint une énergie prédéterminée transmise de l'inducteur (16a-f, 18a-f ; 16h, 18h) au logement d'outil (12a-f ; 12h)
ou après avoir atteint une proportion prédéterminée d'une énergie totale prédéterminée de tous les inducteurs (16a-f, 18a-f ; 16h, 18h).
